(19) Europäisches Patentamt
European Patent Office
Office européen des brevets

(11) Veröffentlichungsnummer: **0 303 158 B1**

(12) **EUROPÄISCHE PATENTSCHRIFT**

(45) Veröffentlichungstag der Patentschrift: **15.06.94**

(51) Int. Cl.$^5$: **C08G 85/00**

(21) Anmeldenummer: **88112532.2**

(22) Anmeldetag: **02.08.88**

Die Akte enthält technische Angaben, die nach dem Eingang der Anmeldung eingereicht wurden und die nicht in dieser Patentschrift enthalten sind.

# (54) Härtbare Verbindungen, deren Herstellung und Verwendung.

(30) Priorität: **08.08.87 DE 3726497**

(43) Veröffentlichungstag der Anmeldung:
**15.02.89 Patentblatt 89/07**

(45) Bekanntmachung des Hinweises auf die Patenterteilung:
**15.06.94 Patentblatt 94/24**

(84) Benannte Vertragsstaaten:
**AT BE CH DE ES FR GB GR IT LI LU NL SE**

(56) Entgegenhaltungen:
**EP-A- 0 119 769**
**EP-A- 0 234 395**
**EP-A- 0 274 721**
**EP-A- 0 121 837**
**EP-A- 0 272 665**
**US-A- 3 084 140**

(73) Patentinhaber: **HOECHST AKTIENGESELLSCHAFT**

**D-65926 Frankfurt(DE)**

(72) Erfinder: **Hönel, Michael, Dr.**
**Wallstrasse 24**
**D-6500 Mainz(DE)**
Erfinder: **Ziegler, Peter, Dr.**
**Essenheimer Strasse 87**
**D-6500 Mainz(DE)**
Erfinder: **Foedde, Hartmut**
**Adolfstrasse 12**
**D-6204 Taunusstein(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

In der DE-Auslegeschrift 22 65 195 wird ein elektrisch ablagerbares Kunstharz beschrieben, das aus einem Epoxidharz, einem Polyaminderivat mit latenten primären Aminogruppen, die durch Ketimingruppen verkappt sind, und mit mindestens einer sekundären Aminogruppe sowie gegebenenfalls einem anderen primären oder sekundären Amin hergestellt worden ist. Das Verfahren ist jedoch wenig geeignet, Polyamine als flexibilisierende Kettenverlängerer in das Harz einzubauen. Dementsprechend sind die Eigenschaften dieser Harze bei mechanischer Belastung (Schlagtiefung, Erichsentiefung), insbesondere bei elektrisch abgelagerten Überzügen auf elektrisch leitenden Substraten, häufig nicht befriedigend.

In der DE-Offenlegungsschrift 36 44 370 sind weiterhin Bindemittel insbesondere für wasserverdünnbare, kathodisch abscheidbare Lacke vorgeschlagen worden, die Umsetzungsprodukte aus 2-Oxo-1,3-dioxolangruppen enthaltenden Verbindungen und bestimmten Polyaminen sind. Daraus erhaltene Überzüge befriedigen hinsichtlich der Haftung zum sogenannten Füller jedoch noch nicht in allen Fällen.

Überraschenderweise wurde nun gefunden, daß Bindemittel, die durch Umsatz von 2-Oxo-1,3-dioxolangruppen enthaltenen Verbindungen mit bestimmten di-sekundären Aminen und gegebenenfalls weiteren difunktionellen, freie primäre Aminogruppen enthaltenden Aminen sowie gegebenenfalls Kettenstoppern erhältlich sind, in härtbaren Mischungen Lackfilme liefern, die sich durch besonders gute Eigenschaften bei mechanischer Belastung und optimierter Zwischenschichthaftung, insbesondere gegenüber PVC- oder Füller-Beschichtungen auszeichnen.

Gegenstand der Erfindung sind daher härtbare, stickstoffbasische Gruppen tragende Verbindungen, die erhalten werden durch Umsetzung

A) einer Verbindung, die im Mittel mindestens eine endständige 2-Oxo-1,3-dioxolan-Gruppe pro Molekül enthält, mit

B) einem difunktionellen Amin der Formeln III, IV oder V

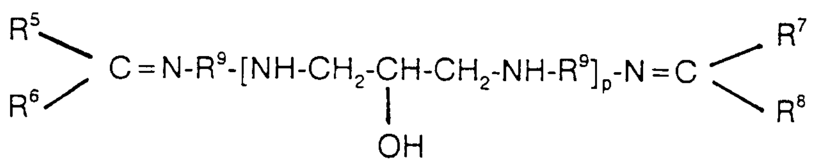

(III)

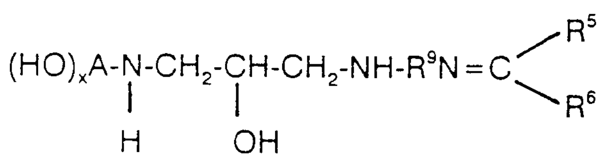

(IV)

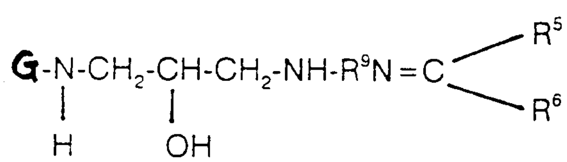

(V)

worin bedeuten:

$R^5$, $R^6$, $R^7$, $R^8$ = gleich oder verschieden ($C_1$-$C_6$)Alkyl (verzweigt oder unverzweigt), oder $R^5$ und $R^6$ bzw. $R^7$ und $R^8$ Teil eines cycloaliphatischen Ringes, oder jeweils einer der Reste $R^6$ und/oder $R^8$ gleich Aryl mit 6 bis 12 Atomen;

$R^9$ = $-[-(CR^{10}R^{11}-)_n-Z^1-(-CR^{12}R^{13}-)_m-Z^2-(-CR^{14}R^{15}-)_l-]_k$ mit $Z^1$, $R^2$ = O, S, N-Alkyl mit bis zu 8 C-Atomen, N-Phenyl, N-Mono-, Di- oder Trialkylphenyl mit 1 bis 4 C-Atomen pro Alkylgruppe, einen zweiwertigen Phenylenrest, der gegebenenfalls durch inerte oder nicht störende Gruppen substituiert ist, und/oder eine chemische Bindung,

$R^{10}$ bis $R^{15}$ = H, $CH_3$, $C_2H_5$, Phenyl oder Mono-, Di- oder Trialkylphenyl mit 1 bis 4 C-Atomen pro Alkylgruppe,

n, m, l = 0 bis 12, vorzugsweise 0 bis 6, wobei die Summe aus $n+m+l \geqq 2$, vorzugsweise $\geqq 4$ und
k = 1 bis 6, vorzugsweise 1 bis 3,
p = 1 bis 5,
A = verzweigtes oder unverzweigtes ($C_1$-$C_6$)-Alkyl,
x = 1 bis 5,
G = verzweigtes oder unverzweigtes ($C_1$-$C_8$)-Alkyl oder ($C_5$-$C_9$)-Cycloalkyl, gegbenenfalls durch ($C_1$-$C_3$)-Alkylgruppen substitiuert und gegebenenfalls

C) einem difunktionellen Amin mit mindestens einer freien primären Aminogruppe und gegebenenfalls mindestens einer sekundären Aminogruppe sowie gegebenenfalls Kettenstoppern D).

Weiterhin betrifft die Erfindung ein Verfahren zur Herstellung dieser härtbaren Verbindungen, sowie härtbare Mischungen, enthaltend diese härtbaren Verbindungen, und deren Verwendung insbesondere in Lackzubereitungen.

Als Verbindung (A) können beliebige Materialien eingesetzt werden, sofern sie im Mittel mindestens eine, vorzugsweise zwei oder drei 2-Oxo-1,3-dioxolan-Gruppen pro Molekül enthalten und keine anderen funktionellen Gruppen aufweisen, welche die Reaktion mit den Komponenten (B) und gegebenenfalls (C) stören könnten. Das Molekulargewicht $M_n$ (Zahlenmittel, bestimmt mit der Gelchromatographie, PS-Standard) sollte im allgemeinen zwischen 100 und 10 000, vorzugsweise zwischen 150 und 3500 liegen und das 2-Oxo-1,3-dioxolan-Äquivalentgewicht zwischen 100 und 1250. Die 2-Oxo-1,3-dioxolan-Gruppen sind vorzugsweise endständig, jedoch können in manchen Fällen auch Verbindungen als Komponente (A) eingesetzt werden, welche diese Gruppen in statistischer Verteilung über die Molekülkette enthalten und die durch Copolymerisation unter Verwendung von olefinisch ungesättigten, diese 2-Oxo-1,3-dioxolan-Gruppe enthaltenden Verbindungen hergestellt werden können. Ein derartiges Herstellungsverfahren ist beispielsweise in der DE-Patentanmeldung P 36 44 373.5 beschrieben.

Vorzugsweise besitzt die Komponente (A) die allgemeine Formel (I)

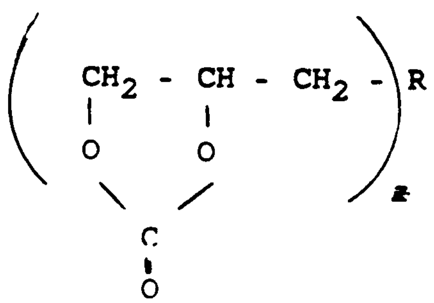

(I)

in der bedeuten

R = z-wertiger Rest eines Polyethers, Polyetherpolyols, Polyesters, Polyesterpolyols, der gegebenenfalls auch ($NR^2$)-Gruppen enthalten kann, wobei $R^2$ für Wasserstoff, Alkyl mit 1 bis 8 C-Atomen oder Hydroxyalkyl mit 1 bis 8 C-Atomen steht, oder
einen z-wertigen Kohlenwasserstoffrest, vorzugsweise Alkylenrest mit 2 bis 18 C-Atomen der gegebenenfalls inerte oder nichtstörende Gruppen tragen kann, oder
einen z-wertigen Poly(sek.)aminrest oder
den z-wertigen Rest eines Umsetzungsproduktes einer Epoxy-Carbonat-Verbindung mit Polyaminen, Polyolen, Polycaprolactonpolyolen, OH-gruppenhaltigen Polyestern, Polyethern, Polyglykolen, hydroxy-, carboxyl- und aminofunktionellen Polymerölen mit mittleren Molekulargewichten von 800 bis 10 000, Polycarbonsäuren, hydroxy- oder aminofunktionellen Polytetrahydrofuranen und Reaktionsprodukten von Polyaminen mit Glycidylestern von $\alpha,\alpha$-Dialkylalkanmonocarbonsäuren der Summenformel $C_{12-14}H_{22-26}O_3$ oder mit Versaticsäureglycidylester,
z = 1 bis 5.

Der Index z steht in dieser Formel (I) bevorzugt für 2 oder 3, insbesondere für 2.

Derartige Komponenten (A) sind beispielsweise in den DE-Offenlegungsschriften 36 24 454 und 36 44 370 beschrieben, auf die hier Bezug genommen wird.

Der Rest R in obiger Formel (I) kann speziell die nachstehenden Bedeutungen (Ia) bis (Id) aufweisen:

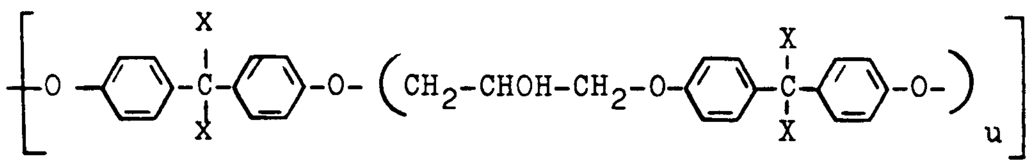

(Ia)

in der X Wasserstoff oder Methyl, u 0 bis 5 und v 1 bis 20, vorzugsweise 1 bis 6 ist. Die Werte für u und v sind als statistisches Mittel anzusehen, da durch die Molekulargewichtsverteilung der Glycidylether ein großer Bereich einbezogen werden kann;

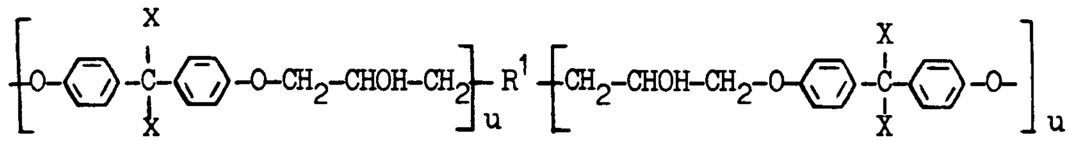

(Ib)

hierin haben X und u die genannte Bedeutung und $R^1$ steht für O-Alkyl-O, N-Alkyl-N mit jeweils 2 bis 18 C-Atomen im Alkylrest sowie für den Rest von Polyaminen, Polyolen, Polycaprolactonpolyolen, OH-gruppenhaltigen Polyestern, Polyethern, hydroxy-, carboxyl- und aminofunktionellen Polymerölen, Polycarbonsäuren, hydroxy- oder aminofunktionellen Polytetrahydrofuranen und Reaktionsprodukten von Polyaminen mit Glycidylethern bzw. Glycidylestern von in $\alpha$-Stellung verzweigten Carbonsäuren mit 8 bis 14 C-Atomen (sog. $^{(R)}$Versaticsäuren),

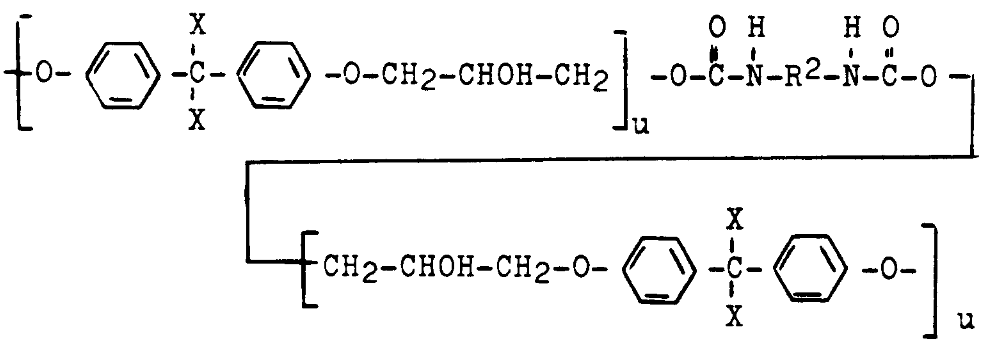

(Ic)

X und u haben hierin die genannte Bedeutung und $R^2$ steht für Alkylen mit 2 bis 18 C-Atomen, den Rest eines Poly(sek.)Amins oder aminofunktionelles Polytetrahydofurans;

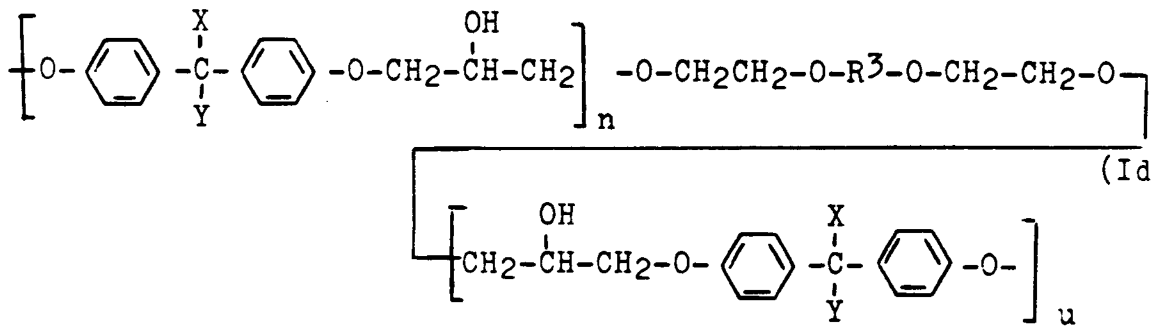

(Id)

X und u haben wiederum die genannte Bedeutung, u ist aber vorzugsweise gleich 1, und $R^3$ stellt den Rest

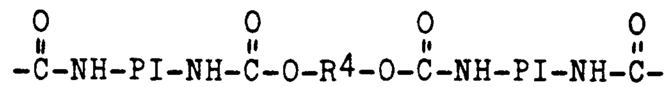

oder

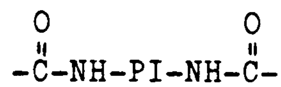

dar, wobei $R^4$ gleich $R^1$ ist mit Ausnahmen der Polycarbonsäuren und der carboxylfunktionellen Polymeröle und PI für den Rest eines Polyisocyanats steht.

Die Verbindungen gemäß Formel (I), wie auch die nachfolgend beschriebenen Verbindungen (II) und (VII), können durch Anlagerung von $CO_2$ an die entsprechenden epoxidgruppenhaltigen Verbindungen hergestellt werden. Derartige Verfahren sind beispielsweise in der PCT(WO)-Patentanmeldung 84/03 701 sowie in den DE-Offenlegungsschriften 35 29 263 und 36 00 602 beschrieben. Auf deren Offenbarung, einschließlich der bevorzugten Ausführungsformen, wird hier Bezug genommen. Geeignete Ausgangspolyepoxide sind beispielsweise in Wagner/Sarx, "Lackkunstharze", Carl Hansa Verlag (1971), S. 174 ff sowie in der EP-Offenlegungsschrift 60 506 aufgeführt, auf die hier gleichfalls Bezug genommen werden.

Bevorzugte Ausgangsstoffe zur Herstellung der cyclischen Carbonate (I) und der gemischten Epoxyd-Carbonat-Verbindungen (II) sind die Polyglycidylether von Polyphenolen z.B. Bisphenol A. Die Glycidyläther erhält man beispielsweise durch Umsetzung eines Polyphenols mit Epichlorhydrin. Polyphenole sind beispielsweise Bis-(4-hydroxyphenyl)-2,2-propan, Bis(4-hydroxyphenyl)-methan, 4,4'-Dihydroxybenzophenon, Bis(4-hydroxyphenyl)-1,1'-ether, Bis(4-hydroxyphenyl)-1,1'-isobutan, Bis(2-hydroxynaphthyl)-methan, 1,5-Dihydroxynaphthalin. Vorzugsweise sind zusätzlich freie Hydroxylgruppen zu den Epoxydgruppen im Polyglycidylether des Polyphenols enthalten.

In manchen Fällen kann es zweckmäßig sein, als Komponente (A) flexibilisierte Verbindungen einzusetzen. Hierbei geht man zur Herstellung der Komponente (A) beispielsweise von gemischten Epoxyd-Carbonaten aus, wie solchen der allgemeinen Formel (II)

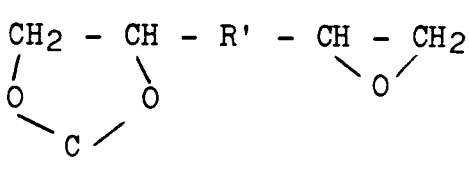

(II)

in der R' der Bedeutung von R in Formel (I) entspricht,. Diese gemischten Epoxid-Carbonate werden mit Verbindungen umgesetzt, die einen flexibilisierenden Effekt auf das Molekül ausüben, beispielsweise die als Komponente (C), genannten Polyamine, aliphatische oder aromatische Polyole, wie Diole, Triole oder Tetraole, beispielsweise Ethylen-oder Propylenglykol, Polyalkylenglykole, Neopentylglykol, Glycerin, Trimethylolpropan, Pentaerythrit sowie Polycaprolactonpolyole, weiter OH-gruppenhaltige Polyester, Polyether, Polyglykole, hydroxy-, carboxyl- und aminofunktionelle Polymeröle, Polycarbonsäuren, hydroxy- und aminofunktionelle Polytetrahydrofurane, Umsetzungsprodukte von Polyaminen mit Glycidylethern bzw. Versaticsäureglycidylestern, Polyetherpolyester, die endständige Carboxylgruppen enthalten. Die Umsetzungen mit diesen flexibilisierenden Verbindungen werden unter Bedingungen vorgenommen, bei denen ganz bevorzugt die Epoxydgruppen reagieren. Auf diese Weise erhält man auch wieder Verbindungen der Formel (I), die endständige cyclische Carbonatgruppen tragen, die mit den Aminoverbindungen umgesetzt werden können.

Die erfindungsgemäß zum Aufbau der härtbaren Verbindungen als Komponente (B) eingesetzten Amine enthalten zwei sekundäre Aminogruppen, zu denen jeweils $\beta$-ständig mindestens eine Hydroxylgruppe vorhanden ist. Vorzugsweise enthalten diese Amine weiterhin mindestens eine primäre Aminogruppe,bevorzugt ein bis drei primäre Aminogruppen, die allesamt bevorzugt mit Ketonen als Ketimingruppen blockiert sind. Alternativ können diese primären Aminogruppen auch mit Monocarbonaten umgesetzt sein. Gegebenenfalls können diese Amine auch noch weitere Gruppen enthalten, sofern diese unter den vorliegenden Bedingungen mit den 2-Oxo-1,3-dioxolan-Gruppen nicht reagieren und den Harzaufbau nicht stören, wie z.B. tertiäre Aminogruppen.

Die C-Zahl dieser Amine (B), beträgt im allgemeinen 4 bis 40, vorzugsweise 10 bis 20. Als Komponente (B) geeignete Amine sind beispielsweise in der DE-Patentanmeldung P 36 44 371.9 beschrieben, auf die hier Bezug genommen wird. Sie können beispielsweise durch Umsatz von 1,2,3-trisubstituierten Propanverbindungen, wie Epichlorhydrin, mit di-primären Aminen oder mit Monoaminen und di-primären Aminen hergestellt werden. Ein weiterer Herstellungsweg für di-sekundäre Amine gemäß (B) ist die Umsetzung von primären Monoaminen mit Diepoxiden, wobei das primäre Monoamin im Überschuß, zumeist im Molekularverhältnis von 2 zu 1, eingesetzt wird. Beispiele für derartige Amine sind 1,3-Bis-methyl-5-aminopentylamino)-2-propanol, Trimethylhexyl-1,3-bis(6-aminohexyl)amino-2-propanol, 1,3-Bis-(methyl-6-aminohexyl)amino-2-propanol; weiterhin entsprechende Umsetzungsprodukte von Ethanolamin, Butylamin, 2-Ethylhexylamin oder entsprechender Gemische mit $^{(R)}$Epikote 828 oder $^{(R)}$Epikote 1001 (Molverhältnis 2:1).

Falls die als Komponente (B) eingesetzten Amine primäre Aminogruppen enthalten, müssen diese blockiert werden, was in der üblichen Weise durch Umsatz mit geeigneten Ketonen unter Entfernung des gebildeten Wassers (z.B. durch azeotrope Destillation) und des eventuell überschüssigen Ketons geschehen kann. Als Ketone kommen in erster Linie solche in Frage, die außer der Ketogruppe keine weitere gegenüber einer primären Aminogruppe reaktive Gruppierungen enthalten. Beispiele hierfür sind Methylethylketon, Methylpropylketon, Methylisopropylketon, Methylisobutylketon, Methylisoamylketon, Diethylketon, Dipropylketon, Cyclohexanon. Bevorzugte Ketone sind Methylisobutylketon und Diethylketon.

Bevorzugte Amine (B) zum Aufbau der erfindungsgemäßen härtbaren Verbindungen haben beispielsweise die nachstehenden Formeln (III) bis (V)

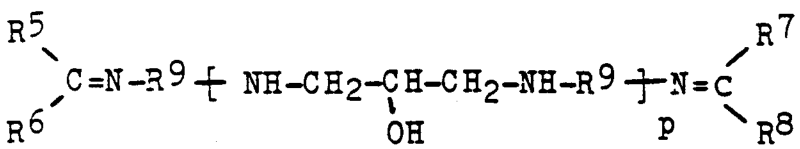
(III)

hierin bedeuten:

$R^5,R^6,R^7,R^8$ = gleich oder verschieden ($C_1$-$C_6$)Alkyl (verzweigt oder unverzweigt), oder $R^5$ und $R^6$ bzw. $R^7$ und $R^8$ Teil eines cycloaliphatischen Ringes, oder jeweils einer der Reste $R^6$ und/oder $R^8$ gleich Aryl mit 6 bis 12 C-Atomen;

$R_9$ =

$$-[(CR^{10}R^{11})_n Z^1 (CR^{12}R^{13})_m Z^2 (CR^{14}R^{15})_l]_k-$$

mit

$Z^1,Z^2$ = O, S, N-Alkyl mit bis zu 8 C-Atomen, N-Phenyl, N-Mono-, -Di- oder -Trialkylphenyl mit 1 bis 4 C-Atomen pro Alkylgruppe, einen zweiwertigen Phenylenrest, der gegebenenfalls durch inerte oder nichtstörende Gruppen substituiert ist, und/oder eine chemische Bindung,

$R^{10}$ bis $R^{15}$ = H, $CH_3$, $C_2H_5$, Phenyl oder Mono-, Di- oder Trialkylphenyl mit 1 bis 4 C-Atomen pro Alkylgruppe,

n,m,l = 0 bis 12, vorzugsweise 0 bis 6, wobei die Summe aus $n + m + l \geqq 2$, vorzugsweise $\geqq 4$ und

k = 1 bis 6, vorzugsweise 1 bis 3,

p = 1;

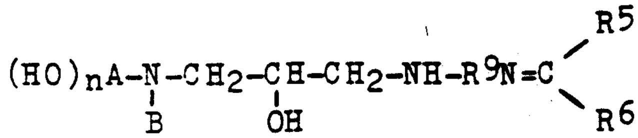

(IV)

hierin bedeuten:

- $R^5$,$R^6$,$R^9$ = gleiche Bedeutung wie in Formel (III),
- A = verzweigtes oder unverzweigtes ($C_1$-($C_6$)-Alkyl,
- B = Wasserstoff,
- n = 1 bis 5;

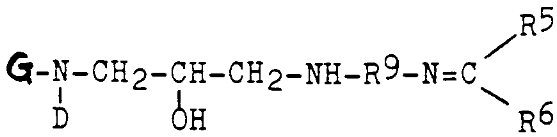

(V)

hierin bedeuten:

- $R^5$,$R^6$,$R^9$ = gleiche Bedeutung wie in Formel (III),
- G = verzweigtes oder unverzweigtes ($C_1$-$C_8$)Alkyl oder ($C_5$-$C_9$)Cycloalkyl, gegebenenfalls durch ($C_1$-$C_3$)-Alkylgruppen substituiert
- D = Wasserstoff.

Es können auch Gemische verschiedener Amine als Komponente (B) eingesetzt werden.

Als gegebenenfalls miteinzusetzende Komponente (C) können bifunktionelle Amine mit mindestens einer freien primären Aminogruppe und gegebenenfalls mindestens einer sekundären Aminogruppe verwendet werden.

Beispielsweise können derartige Polyamine diprimär sein und keine weiteren basischen Gruppen enthalten. Alternativ können sie zusätzlich tertiäre Aminogruppen oder auch sekundäre Aminogruppe enthalten; dabei müssen aber die Reaktionsbedingungen so gewählt werden, daß letztere nicht mit den 2-Oxo-1,3-dioxolangruppen reagieren, da ansonsten Gelierung eintritt. Geeignete Polyamine sind beispielsweise in der DE-Offenlegungsschrift 36 24 454 beschrieben, auf die hier Bezug genommen wird.

Weiterhin kommen hier auch Amine in Frage, die eine primäre Aminogruppe und eine sekundäre, durch eine $\beta$-ständige Hydroxylgruppe aktivierte Aminogruppe enthalten.

Beispiele für Amine entsprechend (C) sind solche der nachstehenden Formel (VI)

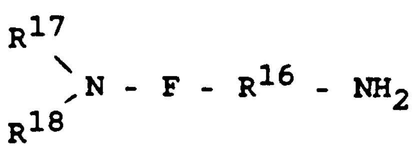

(VI)

in der bedeuten:

- $R^{16}$ = zweiwertiger Kohlenwasserstoffrest, vorzugsweise ein geradkettiger oder verzweigter Alkylenrest mit 2 bis 18 C-Atomen, der gegebenenfalls inerte oder nicht störende Gruppen tragen kann,
- $R^{17}$,$R^{18}$ = gleich oder verschieden, Wasserstoff, Alkyl mit 1 bis 8 C-Atomen oder Hydroxyalkyl mit 1 bis 8 C-Atomen im Alkylrest, wobei $R^{17}$ und $R^{18}$ auch eine cyclische Ringverbindung ergeben können,
- F = chemische Bindung oder $-(R^{16}-NH)_r-R^{16}-NH-$ , worin r Null oder eine ganze Zahl von 1 bis 6 ist und $R^{16}$ die vorstehende Bedeutung hat.

Konkret seien als Vertreter hierfür genannt: Ethylendiamin, Propylendiamin, 2-Methylpentamethylendiamin, Hexamethylendiamin, Octamethylendiamin, Triacetondiamin, Dioxadecandiamin, Dioxadodecandiamin und höhere Homologe, cycloaliphatische Diamine wie 1,4-Cyclohexandiamin; 4,4'-Methylen-bis-cyclohexylamin, 4,4'-Iso-propylen-bis-cyclohexylamin, Isophorondiamin, m-Xylylendiamin, N-Methylethylendiamin, Hydroxyethylaminoethylamin, -propylamin, N-Aminoethylpiperazin, N,N-diethylethylendiamin, -propylendiamin, N,N-Dihydroxyethylethylendiamin, Diethylentriamin, Dipropylentriamin, Bishexamethylentriamin, Triethylentetramin, Tetraethylenpentamin, Pentaethylenhexamin, Heptaethylenoctamin und ähnliche. Weiterhin Umsetzungsprodukte von Diaminen wie z.B. Ethylendiamin, Propylendiamin, Hexamethylendiamin, Trimethylhexamethylendiamin, m-Xylylendiamin mit endständigen Epoxiden, wie z.B. Propylenoxid, Hexenoxid oder mit Glycidylethern wie Phenylglycidylether, Ethylhexylglycidylether, Butylglycidylether oder mit Glycidylestern wie "Cardura E10", oder mit ungesättigten Verbindungen wie Acrylnitril, Methacrylnitril. Die Umsetzung hat dabei so zu erfolgen, daß nur eine der vorhandenen zwei primären Aminogruppen alkyliert, d.h. mit den genannten Epoxiden oder ungesättigten Verbindungen umgesetzt wird. Zu diesem Zwecke wird die entsprechende Polyaminoverbindung im Überschuß eingesetzt. Selbstverständlich können auch Mischungen der Amine Verwendung finden.

Als Komponente (C) können auch Amine mit zusätzlichen Amidgruppen verwendet werden, wie sie beispielsweise durch Kondensation von di-primären Aminen mit Dicarbonsäuren, wie Adipinsäure, Sebacinsäure oder dimerer Fettsäure erhalten werden. Auch andere Amin-Addukte sind hierfür einsetzbar, z.B. Imide.

Andere Polyamine, die als Komponente (C) Einsatz finden können, sind beispielsweise auch solche entsprechend der obigen Formel (III), wobei hier jedoch die beiden endständigen primären Aminogruppen nicht verkappt sind. Bei dem Harzaufbau werden diese Polyamine dann erst in einer zweiten Stufe (erste Stufe: Umsatz von (A) und (B); siehe hierzu weiter unten) verwendet und dabei durch Wahl geeigneter Reaktionsbedingungen nur die primären Aminogruppen, die gegenüber den 2-Oxo-1,3-dioxolan-Gruppen reaktiver sind, mit letzteren zur Reaktion gebracht.

Die Mengenverhältnisse der Komponenten (A), (B) und gegebenenfalls (C) können in weiten Grenzen schwanken. Im allgemeinen wird die Menge an Komponente (A) 25 bis 70 Mol-%, vorzugsweise 30 bis 60 Mol-%, die von Komponente (B) 8 bis 60 Mol-%, vorzugsweise 10 bis 15 Mol-% und die von Komponente (C) 0 bis 60 Mol-%, vorzugsweise 20 bis 50, betragen. Bevorzugt werden diese Komponenten in solchen Mengen eingesetzt, daß das Verhältnis der 2-Oxo-1,3-dioxolan-Äquivalente zu den reaktiven Amin-Äquivalenten der Komponenten (B)/(C) zwischen 0,8 und 1,2 Mol-%, vorzugsweise 1,0 und 1,1 Mol-% liegt.

Um das Molekulargewicht der erfindungsgemäßen härtbaren Verbindungen zu begrenzen, werden in einer bevorzugten Ausführungsform der Erfindung sogenannte Kettenstopper (D) verwendet. Bei endständigen Aminogruppen, d.h. wenn ein Überschuß an Amin-Äquivalenten aus (B)/(C) gegenüber 2-Oxo-1,3-dioxolan-Äquivalenten vorliegt, sind dies z.B. Monocarbonate, Monoepoxydverbindungen und teilverkappte Polyisocyanate, wobei die Umsetzungen gleichzeitig oder in mehreren getrennten Stufen durchgeführt werden können.

Als Monocarbonatverbindungen eignen sich hierfür solche der Formel (VII)

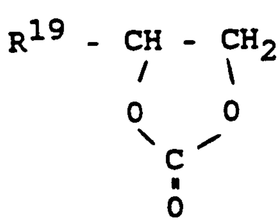

(VII)

in der $R^{19}$ Wasserstoff, Alkyl mit 1 bis 18, vorzugsweise 1 bis 10 C-Atomen, oder Reste des Versaticsäureglycidylesters, Glycidylester oder Glycidylether darstellt, bei denen die Epoxydgruppe in der weiter oben angegebenen Weise zu cyclischen Carbonaten umgesetzt worden ist.

Neben den Monocarbonaten und Monoepoxyden können auch teilverkappte Polyisocyanate eingesetzt werden, da diese Verbindungen zuerst mit einer freien $NH_2$-Gruppe reagieren. Prinzipiell kann jede Aminreaktion herangezogen werden, die bevorzugt an der primären Aminogruppe ansetzt, bevor die im Molekül enthaltenen sekundären Aminogruppen reagieren. Die zum Kettenabbruch eingesetzte Verbindung kann zusätzlich auch zur Flexibilisierung des resultierenden Lackes dienen, indem entsprechende langkettige Verbindungen, die in der Praxis bekannt sind, eingebaut werden.

Bei endständigen 2-Oxo-1,3-dioxolan-Gruppen sind z.B. als Kettenstopper unter den Reaktionsbedingungen monofunktionelle Amine brauchbar. Als solche kommen etwa mono-primäre oder mono-sekundäre Amine in Betracht, wie Methylamin, Ethylamin, Propylamin, Butylamin, Octylamin, Laurylamin, Stearylamin, Ethanolamin, Isononyloxypropylamin, N-Methylaminopropylamin, Diethyl(methyl)aminopropylamin, Aminoethylethanolamin, Neopentanolamin, Dimethylaminopentanolamin, 3-Aminopropanol, Amidamine aus di-primären Aminen und Monocarbonsäuren, Monoketime von di-primären Aminen udgl..

Weiterhin sind hierfür Amine der obigen Formel (IV) (hier jedoch dann der Rest B = Alkyl oder $(HO)_nA$) oder der Formel (V) (D jedoch gleich C) geeignet.

Außerdem können für diesen Zweck auch Amine der nachstehenden Formel (VIII) eingesetzt werden

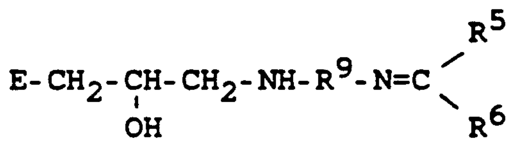

(VIII)

worin bedeuten:

$R^5$,$R^6$,$R^9$ = gleiche Bedeutung wie in Formel (III),

E = $(C_2$-$C_8)$-Alkoxy, linear oder verzweigt, oder $(C_5$-$C_{15})$-Acyloxy, vorzugsweise verzweigt mit $C_4$-$C_{15}$.

Schließlich eignen sich als Kettenstopper grundsätzlich alle Amine gemäß (B) und (C), sofern sie durch Umsatz mit Blockierungsmitteln, wie Monoepoxiden und evtl. auch Monocarbonaten sowie teilweise blokkierten Polyisocyanaten oder durch Ketiminbildung monofunktionell gemacht worden sind.

Die Menge an Kettenstopper (D) liegt im allgemeinen bei 10 bis 70 Mol-%, vorzugsweise 20 bis 40 Mol-%, bezogen auf Gesamtmolmasse von (A) bis (D).

Das Molekulargewicht $M_n$ (Zahlenmittel; bestimmt mittels Gelchromatographie, Polystyrolstandard) der erfindungsgemäßen härtbaren Verbindungen liegt im allgemeinen zwischen 500 und 2000, vorzugsweise zwischen 1000 und 10 000. Der Staudinger-Index [$\eta$] weist zumeist Werte von 0,5 bis 2,0 [dl/g], bestimmt in Methoxypropanol, auf. Die Aminzahlen betragen zumeist 10 und 300 mg KOH/g, vorzugsweise 20 und 100 mg KOH/g. Falls die härtbaren Verbindungen selbsthärtende Eigenschaften haben sollen, wird ein Teil der vorhandenen Hydroxyl- und/oder primären bzw. sekundären Aminogruppen mit einem teilblockierten Polyisocyanat, das im Mittel noch ca. eine freie Isocyanatgruppe im Molekül enthält, umgesetzt. Eine andere Möglichkeit besteht z.B. in der Einführung von $\beta$-Hydroxyalkylcarbamatgruppen durch Umsatz eines Teils der Aminogruppen mit einem cyclischen Carbonat, wie Ethylencarbonat. Diese Methode ist beispielsweise in der DE-Offenlegungsschrift 3 246 812 und der EP-Offenlegungsschrift 119.769 beschrieben.

Zur Herstellung der härtbaren Verbindungen gemäß der Erfindung werden die Komponenten (A), (B) und vorzugsweise (D) sowie gegebenenfalls zusätzlich (C) in den erforderlichen stöchiometrischen Verhältnissen bzw. Mengen bei erhöhten Temperaturen und vorzugsweise in Gegenwart von Katalysatoren und inerten Lösungsmitteln umgesetzt. Die Umsetzung wird im allgemeinen so lange vorgenommen, bis z.B. eine konstante oder die theoretische Aminzahl erreicht ist.

Unter erhöhten Temperaturen ist hier der Bereich von ca. 50 bis 140 °C, vorzugsweise 70 bis 120 °C zu verstehen.

Während für die Umsetzung der primären Aminogruppen der Komponente (C) mit den 2-Oxo-1,3-dioxolan-Gruppen der Komponente (A) im allgemeinen kein Katalysator erforderlich ist, ist eine Katalyse für die Reaktion der reaktionsträgeren sek. Aminogruppen der Komponente (B) zweckmäßig. Geeignete Katalysatoren hierfür sind stark basische Verbindungen, wie quartäre Ammoniumverbindungen, beispielsweise Alkyl-, Aryl-und/oder Benzylammoniumhydroxide und -carbonate. Spezielle Vertreter für quartäre Ammoniumverbindungen sind hierbei Alkylbenzyldimethylammoniumhydroxyd (Alkyl = $C_{16}$-$C_{22}$)-,Benzyltrimethylammoniumhydroxyd und Tetrabutylammoniumhydroxyd.

Bevorzugt sind als Katalysatoren stark basische Amine, beispielsweise Diazabicyclooctan (DABCO), Guanidin etc..

Weiterhin kommen hier auch sogenannte supranukleophile Katalysatoren, z.B. 4-Pyrrolidinopyridin, Poly-(N,N-Dialkylaminopyridin) in Frage; vgl. hierzu Artikel von R.A. Vaidya et al. in Polymer Preprints, Bd 2 (1986), S. 101-102.

Als inerte Lösungsmittel für die obige Umsetzung seien hier beispielsweise genannt: halogenierte Kohlenwasserstoffe (weniger geeignet bei Einsatz als Tauchlack), Ether wie Diethylether, 1,2-Dimethoxyethan, Tetrahydrofuran oder Dioxan; Ketone (falls eine Komponente (C) verwendet wird), wie beispielsweise Aceton, Methylethylketon, Methylisobutylketon, Cyclohexanon und ähnliche; Alkohole, wie Methanol, Ethanol, 2-Butoxyethanol, Propanol, Isopropanol, 2-Methoxy-1-propanol, Butanol und Benzylalkohol; Ester (weniger geeignet bei Einsatz als Tauchlack), wie Butylacetat, Ethylglykolacetat, Methoxypropylacetat; (cyclo)-

aliphatische und/oder aromatische Kohlenwasserstoff, wie Hexan, Heptan, Cyclohexan, Benzol, Toluol, die verschiedenen Xylole sowie aromatische Lösemittel im Siedebereich von ca. 150 bis 180 °C (höhersiedende Mineralölfraktionen, wie (R)Solvesso). Die Lösemittel können dabei einzeln oder im Gemisch eingesetzt werden.

Bei der stöchiometrischen Bewertung der Ausgangsprodukte und auch der Umsetzungsprodukte bezüglich des Fortgangs der Umsetzung werden bei den Komponenten (B)/(C) die Aminzahl, deren Ermittlung in üblicher Weise durch Perchlorsäuretitration erfolgen kann, und bei den Komponenten (A)/(D) die Cyclocarbonat-Äquivalenzzahl, die in üblicher Weise durch Titration mit Kaliumhydroxidlösung bestimmt werden kann, zugrunde gelegt.

Bei der Herstellung der erfindungsgemäßen härtbaren Verbindungen können verschiedene Wege begangen werden. So können die erfindungsgemäßen Polyaminoverbindungen (B)/(C) einzeln oder als Gemische oder auch zeitlich nacheinander der Reaktion zugeführt werden, gegebenenfalls gelöst in nichtstörenden, organischen Lösungsmitteln. In analoger Weise können auch einzelne oder verschiedene modifizierte cyclische Carbonate der Komponente (A) einzeln oder als Gemische oder auch zeitlich nacheinander, vorzugsweise im Gemisch mit gegenüber Cyclocarbonatgruppen inerten organischen Lösungsmitteln, der Reaktion zugeführt werden. Weiterhin kann beispielsweise zunächst die Komponente (A) mit der Komponente (B) in Gegenwart geeigneter Katalysatoren umgesetzt werden und danach in einer zweiten Stufe das so erhaltene Umsetzungsprodukt mit der Komponente (C) - evtl. unter Zugabe von weiterer Komponente (A), und gegebenenfalls unter Zusatz von Kettenstopper (D) - ohne Katalyse zum Endprodukt weiterreagiert werden. Alternativ kann die Reaktion der Komponenten (A) bis (D) auch im einer Einstufen-Reaktion erfolgen, wobei durch Auswahl der Reaktionskomponenten (B)/(C) und/oder der Reaktionsbedingungen dafür Sorge zu tragen ist, daß die Komponenten (B)/(C) nur bifunktionell reagieren können.

Falls man ein selbsthärtendes Produkt erhalten will, kann beispielsweise die Komponente (A) zunächst mit dem teilblockierten Isocyanat umgesetzt werden und danach der Harzaufbau durch Reaktion mit der Komponente (B) sowie gegebenenfalls (C) und (D) erfolgen. Die Komponente (A) kann hierfür in der unflexibilisierten oder flexibilisierten Form eingesetzt werden. Die Reaktion der in Komponente (A) vorhandenen Hydroxyl- und/oder sekundären Aminogruppen mit dem teilverkappten Isocyanat wird dabei unter solchen Bedingungen durchgeführt, daß die cyclischen Carbonatgruppen nicht angegriffen werden. Andererseits ist es aber auch möglich, zunächst die härtbare Verbindung vollständig aufzubauen und in das fertige Produkt dann nachträglich die verkappten Isocyanatgruppen einzuführen.

Polyisocyanate, die nach entsprechender teilweiser Verkappung zur Herstellung von selbsthärtenden Verbindungen eingesetzt werden, können beliebige aus den Polyurethan-bzw. Lackgebiet bekannte Polyisocyanate sein, beispielsweise aliphatische, cycloaliphatische oder aromatische Polyisocyanate. Ein Teil der Isocyanatgruppen kann in bekannter Weise mit üblichen Verkappungsmitteln umgesetzt worden sein. Typische Beispiele für die verwendeten Polyisocyanate sind Xylylendiisocyanat, Diphenylmethan-4,4′-diisocyanat, Triphenylmethyl-4,4′-triisocyanat, Triphenylmethantriisocyanat, Polyphenyl-polymethyl-isocyanat, 2,2,4(2,4,4)-Methylcyclohexyldiisocyanat, Dicyclohexylmethyldiisocyanat, Diethylfumarhexylisocyanat, Bis-(3-Methyl-4-isocyanatocyclo-hexyl)-methan, 2,2-Bis-(4-isocyanatcyclohexyl)-propan, den Methylester des Lysindiisocyanats, das Biuret des Hexamethylendiisocyanats, Diisocyanate dimerer Säuren, 1-Methylbenzol-2,4,5-triisocyanat, Biphenyl-2,4,4′-triisocyanat, das Triisocyanat aus 3 Mol Hexamethylendiisocyanat und 1 Mol Wasser mit 16% NCO-Gehalt und weitere, wenigstens zwei NCO-Gruppen pro Molekül enthaltende Verbindungen, vorzugsweise Isophorondiisocyanat, Hexamethylendiisocyanat sowie Tri- und Tetramethylhexamethylendiisocyanat, insbesondere aber 2,4- oder 2,6-Toluylendiisocyanat oder Gemische dieser Verbindungen. Die in den Verbindungen dem Rest PI zugrundeliegenden Polyisocyanate können gleich oder verschieden sein.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophonatgruppen, Isocyanuratgruppen, Urethangruppen, acylierte Harnstoffgruppen oder Biuretgruppen aufweisen.

Geeignete Polyisocyanate sind schließlich auch die bekannten, endständige Isocyanatgruppen aufweisenden Präpolymere, wie sie insbesondere durch Umsetzung der obengenannten einfachen Polyisocyanate, vor allem Diisocyanate mit überschüssigen Mengen an organischen Verbindungen mit mindestens zwei gegenüber Isocyanatgruppen reaktionsfähigen Gruppen zugänglich sind. Bevorzugt werden diese Präpolymeren allerdings als externe Härterkomponente bei den fremdvernetzenden Systemen eingesetzt.

Als Verkappungsmittel eignen sich aliphatische, cycloaliphatische oder alkylaromatische (einwertige) Alkohole z.B. niedere aliphatische Alkohole wie Methyl-, Äthylalkohol, die verschiedenen Propyl-, Butyl- und Hexylalkohole, Heptyl-, Octyl-, Nonyl-, Propargyl-, Decylalkohol und ähnliche, ferner ungesättigte Alkohole

wie Allylalkohole, cycloaliphatische Alkohole wie Cyclopentanol, Cyclohexanol, alkylaromatische Alkohole wie Benzylalkohol, Methyl sowie p-Methoxy und p-Nitrobenzylalkohol und Monoäther von Glykolen wie Ethylen-glykolmonoethyläther, -monobutyläther und ähnliche. Weitere Verkappungsmittel sind Ketoxime, zweckmäßigerweise mit 3 bis 20 C-Atomen, vorzugsweise 3 bis 10 C-Atomen, wie Acetonoxim, Methylethylketonoxim (= Butanonoxim), Hexanonoxim (wie Methyl-Butylketonoxim), Heptanonoxim (wie Methyl-n-Amylketonoxim), Octanonoxim und Cyclohexanonoxim, CH-acide Verbindungen wie Malonsäurealkylester, Acetessigester sowie Cyanessigester mit jeweils 1 bis 4 C-Atomen in der Estergruppe, NH-acide Verbindungen wie Caprolactam, Aminoalkohole wie Diäthyläthanolamin. Das als Blockierungsmittel bekannte Phenol kann in solchen Fällen eingesetzt werden, bei denen das Umsetzungsprodukt zur Herstellung von lösungsmittelhaltigen Lacken verwendet wird.

Andererseits ist es aber auch möglich, den erfindungsgemäßen Aminourethanen beispielsweise einen üblichen Härter zuzusetzen, wie sie für fremdvernetzende 2-Komponentenlacke verwendet werden. Hierfür kommen beispielsweise in Frage: verkappte Polyisocyanate, etwa wie sie oben für die selbsthärtenden Aminourethane beschrieben sind, weiter $\beta$-Hydroxyester von mindestens bifunktionellen Polycarbonsäuren, Umsetzungsprodukten von Malonsäuredialkylestern mit Aldehyden und Ketonen, die unter Wasserabspaltung zu ungesättigten Dicarbonsäureestern reagieren (Knoevenagel'sche Synthese), Umesterungs- oder Umamidierungshärter, Michael-Additionsprodukte, beispielsweise wie sie in den DE-Offenlegungsschriften 33 15 469, 34 17 441 und 36 02 981 beschrieben sind. Auf diese Literaturstellen, einschließlich der bevorzugten Ausführungsformen, wird hiermit Bezug genommen. Weiterhin sind hier auch Aminoplast (Harnstoff, Melamin)- und Phenolplastharze sowie $\beta$-Hydroxyalkylcarbamatvernetzer zu nennen.

Als Härtekomponente für die erfindungsgemäßen Aminourethane, vorzugsweise in nicht-wäßrigen Lacken, eignen sich auch epoxidgruppenhaltige Verbindungen, wie z.B. niedermolekulare Polyepoxide, epoxidgruppenhaltige Copolymerisate sowie Di-oder Polyglycidylether von aliphatischen oder aromatischen Alkoholen. Weiterhin sind hier als Härterkomponenten auch oligomere oder polymere Verbindungen zu nennen, welche mindestens zwei 1,3-Dioxolan-2-on-Gruppen oder mindestens eine 1,3-Dioxolan-2-on-Gruppe und eine Epoxidgruppe pro Molekül enthalten; hierzu gehören beispielsweise die Verbindungen (I) und (II).

Die Menge an diesen Vernetzern richtet sich nach Art und Anzahl der miteinander reaktiven Gruppen im Bindemittel und Vernetzer und der angestrebten Vernetzungsdichte. Zumeist wird das Gewichtsverhältnis zwischen Bindemittel und Vernetzer zwischen 1:10 bis 10:1, vorzugsweise 1:5 bis 5:1 und ganz bevorzugt bei 1:1 liegen.

Über den zugemischten Härter oder über den eingebauten Härter (= selbstvernetzende Systeme) ist es auch möglich, die für manche Anwendungszwecke erforderliche Flexibilisierung, gegebenenfalls zusätzlich zu der Flexibilisierung durch die Komponenten (A) und/oder (B)/(C), in das System einzubringen.

Die erfindungsgemäßen härtbaren Verbindungen werden vorzugsweise als Bindemittel in Lackzubereitungen auf Lösungsmittel- oder vorzugsweise auf Wasserbasis eingesetzt, die Überzüge mit sehr guten Eigenschaften ergeben. Derartige Überzüge können nach den üblichen Methoden, wie Streichen, Spritzen, Tauchen, Gießen, Rakeln oder vorzugsweise durch kathodische Abscheidung auf den verschiedensten Substraten, wie Holz, Kunststoff oder vorzugsweise Metall hergestellt werden.

Um wäßrige Systeme zu erhalten, die bevorzugt als Elektrotauchlacke verwendet werden, ist es vorteilhaft, die basischen Aminogruppen teilweise oder vollständig zu neutralisieren, um damit Überzugsmassen zu erhalten, die aus wäßriger Lösung bei einem Bad-pH zwischen etwa 3 und 9 elektrisch abgeschieden werden können.

Die Neutralisation der basischen Gruppen wird im allgemeinen mit wasserlöslichen Säuren, beispielsweise Ameisensäure, Essigsäure, Milchsäure oder Phosphorsäure oder entsprechenden Mischungen vorgenommen. Die Säuremenge hängt im Einzelfall von den Eigenschaften des verwendeten Harzes ab und wird im allgemeinen nur so weit durchgeführt, daß das Harz solubilisiert oder in eine stabile, wäßrige Emulsion (bzw. Dispersion) übergeführt wird. Im allgemeinen werden dafür Neutralisationsgrade (NG) von 20 bis 70 % benötigt. Die in den Beispielen angeführten meQ-Werte (mmol Säure/100 g Festsubstanz) stehen dazu in folgender Beziehung:

$$meQ = \frac{NG \cdot AZ}{5,61}$$

Die Feststoffgehalte des Elektrotauchlackes liegen im allgemeinen bei 10 bis 30 Gew.-%.

Wäßrige Zubereitungen, die einen besonders niedrigen Gehalt an flüchtigen organischen Lösungsmitteln besitzen, z.B. 0,5 bis 5 Gew.-%, bezogen auf Gesamtfestkörper (bestimmt bei 125 °C/60 min) erhält man - wie beispielsweise in der DE-Offenlegungsschrift 36 02 980 beschrieben - durch Abdestillation der in den Bindemitteln von der Herstellung oder Lösung her enthaltenen Lösungsmittel. Bevorzugt wird dieser Verfahrensschritt am teilneutralisierten Harz unter vermindertem Druck durchgeführt.

Die beim Harzaufbau erhaltenen Ketiminstrukturen - falls die eingesetzten Aminkomponenten Ketiminggruppen enthielten - deblockieren durch saure Hydrolyse zu den korrespondierenden primären Aminogruppen, nach bzw. (bei) Überführung des "neutralisierten" Harzes in eine wäßrige Emulsion unter Abspaltung des Verkappungsketons. Derart erstellte Lackbäder (Klarlack oder pigmentiert) sollten für eine ausreichende Zeitspanne (i.a. einige Stunden bis mehrere Tage) gerührt werden, bis die Deblockierung kompletiert ist und sich die Baddaten (pH, Leitfähigkeit) stabilsiert haben; erst dann sollte eine Ausprüfung erfolgen. Eventuell vorhandener Restgehalt an Ketimin ist dabei nicht weiter störend, da die Bindemittel im allgemeinen über genügend Basizität für eine ausreichende Neutralisation verfügen und Ketiminstrukturen in gewissem Umfange auch zur Härtung mit verkappten Polyisocyanaten befähigt sind.

Die Lackzubereitungen mit den erfindungsgemäßen Bindemitteln, können zusätzlich - je nach Verwendungszweck - die üblichen Lackadditive enthalten. Als solche seien hier genannt: Pigmente (Eisenoxide, Bleioxide, Bleisilikate, Titandioxid, Bariumsulfat, Zinkoxid, Zinksulfid, Phthalocyaninkomplexe etc.), Pigmentpasten, Antioxidantien, (UV-)Stabilisatoren, Verlauf- bzw. Verdickungsmittel, Entschäumer und/oder Netzmittel, Reaktivverdünner, Füllstoffe (Talkum, Glimmer Kaolin, Kreide, Quarzmehl, Asbestmehl, Schiefermehl, verschiedene Kieselsäuren, Silikate etc.), zusätzliche Härter und zusätzliche härtbare Verbindungen, Katalysatoren udgl.. Diese Additive können der Mischung gegebenenfalls erst unmittelbar vor der Verarbeitung zugegeben werden.

Als Katalysatoren zur Beschleunigung der Härtung eignen sich beispielsweise Salze oder Komplexe von Metallen, wie beispielsweise Blei, Zink, Eisen, Zinn, Mangan und Wismut. Bevorzugte Metallkatalysatoren sind dabei Bleiverbindungen, wie Bleicarboxylate mit 1 bis 10 C-Atomen, beispielsweise Bleiformiat, Bleiacetat, Bleipropionat, Bleilactat, Bleioctoat, Bleiacetylacetonat, etc. oder Zinnverbindungen. Für die Zinnkatalyse eignen sich vorzugsweise Dibutylzinndilaurat und Dibutylzinnoxid bzw. Zinn(IV)-Verbindungen der Formel (IX)

$$[((R^{20})_l Sn)_m(X)_n]_p \qquad \text{(IX)}$$

in der bedeuten:

- $R^{20}$ = Alkylrest mit 1 bis 10 C-Atomen, vorzugsweise 2 bis 4 sowie 8 C-Atomen,
- x = ein- oder zweiwertiger Carboxylrest mit 1 bis 12, vorzugsweise 1 bis 8 sowie 12 C-Atomen oder ein- oder zweiwertiger Alkohol- oder (Poly)-Aminrest mit 1 bis 10 C-Atomen, oder ein ein- oder mehrkerniger phenolischer Rest (subst. oder unsubst.), z.B. p-tert-Butylphenol, p-Nonylphenol etc., oder Reste von ein- oder zweiwertigen Thiolen oder gleich 0;
- l = 2 oder 3;
- m = 1 oder 2;
- n = 1 oder 2;
- p = 1.

Beispiele für Vertreter dieser Formel sind in Wasser relativ schnell hydrolysierende Zinn(IV)-Verbindungen, wie Dialkyl(butyl)zinndiacetat.

Die Katalysatoren werden zumeist in Mengen von 0.1 bis 6 Gew.-%, vorzugsweise 0,2 bis 3 Gew.-% (berechnet auf Metall), bezogen auf härtbare Verbindung (fest) eingesetzt.

Bei Verwendung von Dibutylzinndilaurat als Härtungskatalysator wird dieser zweckmäßigerweise zunächst mit dem Bindemittel homogenisiert und diese homogene Mischung dann anschließend der Lackzubereitung zugegeben.

Im Falle von Dibutylzinnoxid wird dieses vorzugsweise zunächst mit dem Pigment sowie gegebenenfalls einem Zumischharz vermischt und dann der Anreihung zugeführt. Angestrebt wird ein Pigment-Bindemittel-Verhältnis (PBV) von ca. 0,2:1 bis 1:1, wobei die Pigmentierung prinzipiell auf zwei Arten erfolgen kann:

1) Das neutralisierte Bindemittel wird mit den Pigmenten versetzt und über eine Perlmühle oder ein anderes geeignetes Mahlaggregat angerieben;

2) Das (die) neutralisierte Bindemittel (Dispersion) wird mittels einer hochpigmentierten (PBV = 6:1 bis 20:1) Pigmentpaste pigmentiert.

Die Pigmentpaste enthält im allgemeinen ein Pastenharz, Pigmente, Füllstoffe, sonstige lackübliche Hilfsstoffe sowie gegebenenfalls die oben genannten Katalysatoren.

In allen Fällen sollte die Vermahlung der Bindemittel-Pigment-Mischung bzw. der Pigmentpaste auf ausreichend kleine Korngrößen geführt werden (z.B. Hegmann 7), vorzugsweise in Gegenwart von $Al_2O_3$ -(Korund)-Perlen oder Keramik- bzw. $ZrO_2$-Perlen (∅ 0.5-3 mm).

Bei Zinnverbindungen gemäß obiger Formel (IX), wie dem relativ leicht hydrolysierbaren Dibutylzinndiacetat, ist es zweckmäßig, diese zunächst in die wasserhaltige und gegebenenfalls auch ein Zumischharz enthaltende Pigmentpaste einzuarbeiten und dabei auch eine entsprechende Zerkleinerung (z.B. Hegmann 7) vorzunehmen. Diese Pigmentpaste wird dann dem bindemittelhaltigen Lack zugegeben. Alternativ können diese Zinnverbindungen dem bereits pigmenthaltigen Lack direkt zudosiert werden, gegebenenfalls schrittweise, unter intensivem mechanischem Vermischen wie etwa in einer Perlmühle unter Verwendung von Korund(Keramik)-Perlen. In einer Abwandlung ist in den Lack zunächst nur ein (kleinerer) Teil des Gesamtwassers vorhanden, während der (größere) andere Teil erst nach Zudosierung dieser Zinnverbindung dem Lack zugegeben wird. Auch kann die Zinnverbindung hierbei im Gemisch mit einem Zumischharz und/oder einem Teil des Pigments zugegeben werden.

Diese vorstehend beschriebene Art der Zudosierung des Zinn-Härtungskatalysators ist auch für Lackzubereitungen geeignet, die andere Bindemittel als die erfindungsgemäßen härtbaren Verbindungen enthalten.

Die elektrische Ablagerung der Lackteilchen erfolgt nach bekannten Verfahren, worauf hier Bezug genommen wird. Die Abscheidung kann auf allen elektrisch leitenden Substraten erfolgen, z.B. Metall wie Stahl, Kupfer, Aluminium und dergleichen.

Nach der Abscheidung wird der Überzug bei erhöhten Temperaturen, die im allgemeinen von der Beschaffenheit der Härterkomponente abhängig sind, durch übliche Verfahren gehärtet, wobei Temperaturen von 100 bis 220 °C vorzugsweise 130 bis 180 °C verwendet werden. Die Verwendung von üblichen Bleikatalysatoren ist bei der Härtung erfindungsgemäßer Lackharze nur dann besonders effektiv, wenn diese Lackharze z.B. mit $\beta$-Alkoxy- oder $\beta$-Dialkylamino-alkoholen und/oder mit Ketonoximen verkappte Polyisocyanatreste enthalten, und kann zu kürzeren Härtungszeiten bzw. zu niedrigeren Einbrenntemperaturen führen.

In den nachfolgenden Beispielen bedeutet T Gewichtsteile und % Gewichtsprozent. Die Aminzahlen beziehen sich stets auf Festharz.

## Beispiele

### I. Herstellung der Vorprodukte

I.1. Herstellung von 1,3-Bis-(methyl-5-amino-pentylamino)-2-propanol (→ Komponente (B))

In einem 6 l-Vierhalskolben mit Tropftrichter, Rührer Thermofühler, RF-Kühler mit Dean-Stark-Wasserabscheider wurden unter Stickstoff zu einer gut gerührten Mischung von 2325 g (20 Mol) 2-Methylpentamethylendiamin ((R)Dytek A von Du Pont) in 1.6 l Toluol und Natronlauge aus 205 g (5.1 Mol) Natriumhydroxid in 210 ml E-Wasser bei 27 bis 42 °C 463 g (5 Mol) Epichlorhydrin zugetropft. Man wartete nach den ersten 50 bis 60 ml (in ca. 5 min) etwa 10 min ab, bis man eine Reaktion (etwas exotherm, salzbildend) erkannte. Bei Eiskühlung wurden für die weitere Zugabe ca. 2 Stunden benötigt. Während weiteren 1,5 Stunden ließ man bei höchstens 45 °C unter gelegentlicher Kühlung und Rühren ausreagieren, bis der Ansatz keine Eigenwärme mehr erzeugte. Nach weiteren 20 min zum Vervollständigen bei rd. 55 °C wurde das Wasser (Th. 300 g) azeotrop ausgetrieben, dann auf 95 °C abgekühlt und schließlich nach Zusatz von 5 g (R)Corolite oder R)Celite heiß durchs Filter in den Destillationskolben (mit 200 ml Toluol nachwaschen) gesaugt. Danach wurde zunächst Toluol (schwaches Vakuum), dann Aminüberschuß $KP_{20\ Torr}$ = 82 °C) abdestilliert, zum Schluß bei 150 °C Sumpftemperatur/20 Torr. Es wurde ein gelbliches Öl erhalten mit einer Aminzahl von 779. Die Ausbeute betrug 1440 g (100 % d.Th.).

I.2. Herstellung von 1,7-Di-(2-ethylhexylamino)-2,6-dihydroxy-4-isononyloxypropyl-4-imino-heptan (→ Komponente (B))

a) Unter Verwendung der gleichen Apparatur wie in I.1. wurden zu einer gut gerührten Mischung von 202 T (1 Mol) Isononyloxypropylamin in 250 T n-Butanol bei 30 °C bis 35 °C Epichlorhydrin (186 T, 2 mol) zugetropft. Nach ca. 20 bis 50 ml begann meßbare Wärmeentwicklung, anschließend wurde unter Kühlung während 3 Stunden die restliche Menge an Epichlorhydrin zudosiert. Dann wurde bei 35 °C bis 50 °C nachreagieren gelassen (ca. 1 Stunde).

b) Zu 80 T (2 mol) NaOH in 90 T E-$H_2O$ wurden 774 T (6 mol) 2-Ethylhexylamin einlaufen gelassen.

Das Umsetzungsprodukt gemäß Stufe a) wurde bei 40 °C - 50 °C zu dem Amin gemäß Stufe b) zugegeben. Anschließend wurde Salzbildung festgestellt und 1 Stunde bei 50 °C nachreagiert. Dannach wurde Wasser azeotrop ausgetrieben (ca. 110 T), dann auf 95 °C abgekühlt und nach Zusatz

von 5 g Corolite heiß durchs Filter in den Destillationskolben (mit 200 ml n-Butanol nachwaschen) abgesaugt. Danach wurde zunächst n-Butanol (60 °C, 50-100 Torr) und dann der Aminüberschuß (20 Torr, 130 °C) abdestilliert.
Ausbeute: 575 g (100 % d.Th.) Aminzahl: 296 (Theorie 293). (nur sek. Aminogruppen).

I.3. Herstellung des Diketimins von 1,3-Bis-(methyl-5-aminopentylamino)-2-propanol (→ Komponente (B))

290 T (1 mol, 2 Äquivalente primäres Amin) des Amins gemäß Beispiel I.1 wurden in 313,5 T (3,135 mol) Methylisobutylketon gelöst, und bei 115 °C bis 140 °C wurde das entstehende Wasser azeotrop ausgetrieben (ca. 36 bis 30 ml). Diese Ketiminlösung (ca. 80 %ig) wurde dann unter vermindertem Druck bei 60 °C bis 100 °C eingeengt, bis ca. 113 g Methylisobutylketon (entspricht Festkörper des Produkts ca. 100 %) abgezogen waren.
Ausbeute: 452 g (100 % d.Th.) Aminzahl: 478 (theoret. 498), gelbliches Öl.

I.4. Herstellung eines halbverkappten Diisocyanats

Zu 174 T (1 mol) (R)Desmodur T 80 (80 % 2,4-, 20 % 2,6-Toluylendiisocyanat) wurde bei 30 °C bis 70 °C in Gegenwart von 0,9 Gew.-% Benzyltrimethylammoniumhydroxid als Katalysator 124 T (1.05 mol) Butylglykol einlaufen und bis zu einem %-NCO-Wert von ca. 13,0 bis 14,1 reagieren gelassen.

I.5. Herstellung einer flexibiliserenden Verbindung

415 T (1 Äquivalent OH) (R)Capa 205 (Polycaprolactondiol, MG ca. 840 der Fa. Interos England) und 300 T (1 Äquivalent OH) handelsübliches Polyethylenglykol 600 (Fa. Hoechst AG, MG ca. 600) wurden mit 152 T (1 Mol Tetrahydrophthalsäureanhydrid und 266 T (1 mol) Dodecenylbernsteinsäureanhydrid (Shell) vermischt und in Gegenwart von 0,3 % Triethylamin bei 80 °C - 120 °C zur Reaktion gebracht bis eine Säurezahl von ca. 98 bis 102 mg KOH/g Festsubstanz erreicht war.

II. **Herstellung der härtbaren Verbindung (Bindemittel)**

II.1. 832 GT eines Monoepoxy-monocyclocarbonats (= 2 Äquivalente Epoxid) auf Basis von handelsüblichem (R)Epicote 828 (= Diglycidylether von Bisphenol A) wurden auf a. 60 °C bis 80 °C erwärmt und in Gegenwart von 0,2 - 0,4 Gew.-% handelsüblchem Chromkatalysator (R)AMC-2 (100 gew.-%ig, Produkt der Firma Cordova Chemicals, USA) zu einem Gemisch aus 1133 GT flexibilisierte Dicarbonsäure (= 2 Äquivalente HOOC-Gruppen), hergestellt nach Beispiel I.5 und 218 GT Dimethyldiglykol einlaufen gelassen. Das Umsetzungsgemisch wurde bei 80 °C bis 120 °C bis zu einer Säurezahl von <5 und einer Epoxidzahl <0.1 reagieren gelassen. Das resultierende Umsetzungsprodukt wurde ca. 90 gew.-%ig in DMDG erhalten und anschließend durch Zugabe von ca. 273 GT DMDG auf einen Gehalt von 80 Gew.-% Umsetzungsprodukt verdünnt. Die Ausbeute an dem gewünschten flexibilisierten Biscyclocarbonat betrug praktisch 100 %.

In diese Mischung wurden 2620 T (4 Äquivalente cycl. Carbonat) eines Bis-cyclocarbonats (80 %ig in DMDG) auf Basis von handelsüblichen Epicote 1001 und 608 T eines Monocyclocarbonats (2 Äquiv. cycl. Carbonat) auf Basis von Versaticsäureglycidylester eingebracht und bei 30 °C bis 80 °C mit 2384 T (ca. 7,6 Äquivalente NCO) nach Beispiel I.4 hergestellten halbverkappten Diisocyanats zur Reaktion gebracht, bis ein %-NCO-Wert von ca. 0 erhalten wurde. Mit dieser Carbonatlösung wurde ein Gemisch von 452 T (2 Äquivalente NH) des Diketimins gemäß I.3, 645 T (6 Äquivalente $NH_2$) Bishexamethylentriamin, 627 T Butyldiglykol und 2746 T Methoxypropanol bei 60 °C bis 100 °C in Gegenwart von 0,1 % DABCO bis zu einer Aminzahl von 34,5 mg KOH/g Festsubstanz umgesetzt. Das resultierende Umsetzungsprodukt wurde als 65 gew.-%ige hochviskose Bindemittelharzlösung erhalten.

II.2. 3930 T (6 Äquiv. cycl. Carbonat, 80 %ig im DMDG) eines Biscarbonats auf Basis von Epicote 1001, 608 T (2 Äquiv. cycl. Carbonat) eines Monocyclocarbonats auf Basis von Versaticsäureglycidylester wurden vermengt mit 978 T DMDG versetzt und auf ca. 60 °C erhitzt. In diese Mischung wurden 2384 T (ca. 7.6 Äquiv. NCO) nach Beispiel I.4. hergestellten halbverkappten Diisocyanats eingebracht und bei 60 °C bis 80 °C bis zu einem %-NCO-Wert von ca. 0 umgesetzt. Zu dieser Lösung wurde 430 T (4 Äquiv. prim. Amin) Bishexamethylentriamin 452 T (2 Äquiv. sek. Amin) des Diketimins gemäß Beispiel I.3., 575 T (2 Äquiv. sek. Amin) des Amins gemäß Beispiel I.2. in 2017 T Methoxypropanol und 500 T Butyldiglykol einlaufen gelassen. Die Reaktion wurde in Gegenwart von 0,1 % N-Pyrrolidinopyridin bei 80 °C bis 100 °C bis zu einer Aminzahl von ca. 45,1 mg KOH/g Festharz geführt. Das resultierende Umsetzungsprodukt wurde als 65 %ige hochviskose Bindemittelharzlösung erhalten.

III) **Verwendung der Bindemittel gemäß der Beispiele II für Lackzubereitungen**

Aus den Bindemitteln gemäß der Beispiele II.1 und II.2 wurden pigmentierte Lacke entsprecend folgender Ansätze hergestellt:

III.1. Herstellung einer Pigmentpaste (PBV ca. 12:1)
70,5 T Pastenharz der Fa. Vianova SWE 5219/100 %ig
6,9 T Milchsäure, 100 %
220,0 T E-Wasser
51,0 T Bleisilikat
80,0 T Dibutylzinnoxid
9,2 T Ruß ((R)Printex 25)
370,0 T Titandioxid ((R) Kronos RN 59)
13,2 T Butylglykol
1500,0 T Zirkonoxidperlen
Der Ansatz wurde 60 min bei guter Kühlung gemahlen und anschließend mit 108,0 T E-Wasser auf Verarbeitungsviskosität eingestellt und gesiebt.
III.2. Pigmentierung von II.1:
690,0 T Bindemittel gemäß II.1 (65 %ig) und 16,6 T 50 %ige wäßrige Ameisensäure (≙ meQ = 40) wurden am Dissolver gut homogenisiert und anschließend mit 286,0 T Pigmentpaste gemäß III.1 (63 %ig) versetzt, gut homogenisiert und dann langsam mit 25,07 T E-Wasser versetzt (Bad-FKp ca. 18 %).
III.3. Pigmentierung von II.2:
690,0 T Bindemittel gemäß II.2 (65 %ig) und 22,5 T Dibutylzinndilaurat wurden gut homogenisiert und mit 18,6 T 50 %iger wäßriger Ameisensäure neutralisiert (meQ = 45). Anschließend wurden 160,0 T Titandioxid (Kronos RN 59), 5,0 T Ruß (Printex 25) und 15,0 T Bleisilikat zugegeben und die gesamte Mischung auf einem Dreiwalzenstuhl vermahlen und anschließend mit 2590 T E-Wasser versetzt (Bad-Fkp ca. 18 %).
III.4. Einsatz als Elektrotauchlack
Die Lackzubereitungen III.2 und III.3 wurden der kataphoretischen Abscheidung in einem offenen Glasgefäß unterworfen. Als Kathode diente zinkphosphatiertes Stahlblech und als Anode, im Abstand von 5 bis 10 cm von der Kathode, blankes Stahlblech. Die Abscheidedauer betrug 2 Minuten.

Die jeweils angelegten Spannungen, die erzielten Filmdicken und die Eigenschaften der abgeschiedenen und anschließend gehärteten Filme (Einbrennbedingungen: 20 min Objekttemperatur von 150 °C) sind in nachstehender Tabelle in zusammengefaßter Form wiedergegeben:

Tabelle

| eingesetztes Harz | I.1 | II.2 |
|---|---|---|
| Bad-pH | 6,8 | 6,5 |
| max. Aufbruchspannung (V)[1)] | 300 | 250 |
| Abscheidespannung (V)[1)] | 250 | 200 |
| Filmdicke (μm) | 18-20 | 16-18 |
| Verlauf[2)] | 1 | 1-2 |
| Haftung[2)] | 0 | 0 |
| Vernetzung[3)] | > 100 | > 100 |
| Schlagtiefung[4)] | > 9,04(> 80) | > 9,04(> 80) |
| Erichsen-Tiefung (mm) | 5-6 | 5 |

1) bei 28 °C
2) 0 = bester, 5 = schlechtester Wert
3) MEK-Doppelhübe, 1 kg Auflage; Einbrennbedingungen: 20 min (Ofen), 150 °C
4) Nm (Inch pound), gemäß ASTM D 2794

**Patentansprüche**
**Patentansprüche für folgende Vertragsstaaten : AT, BE, CH, DE, FR, GB, GR, IT, LI, LU, NL, SE**

**1.** Härtbare, stickstoffbasische Gruppen tragende Verbindungen, erhalten durch Umsetzung
A) einer Verbindung, die im Mittel mindestens eine endständige 2-Oxo-1,3-dioxolan-Gruppe pro Molekül enthält, mit

B) einem difunktionellen Amin der Formeln III, IV oder V

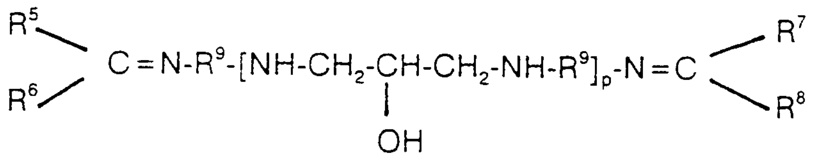

(III)

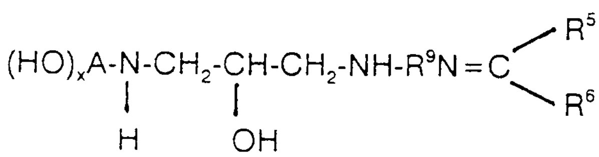

(IV)

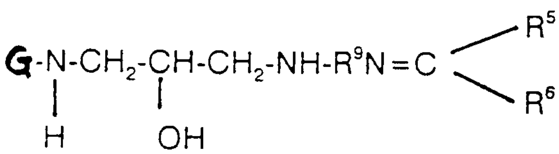

(V)

worin bedeuten:

| | |
|---|---|
| $R^5$, $R^6$, $R^7$, $R^8$ = | gleich oder verschieden $(C_1-C_6)$Alkyl (verzweigt oder unverzweigt), oder $R^5$ und $R^6$ bzw. $R^7$ und $R^8$ Teil eines cycloaliphatischen Ringes, oder jeweils einer der Reste $R^6$ und/oder $R^8$ gleich Aryl mit 6 bis 12 Atomen; |
| $R^9$ = | $-[-(CR^{1}\circ R^{11}-)_n-Z^1-(-CR^{12}R^{13}-)_m-Z^2-(-CR^{14}R^{15}-)_l-]_k$ mit $Z^1$, $Z^2$ = O, S, N-Alkyl mit bis zu 8 C-Atomen, N-Phenyl, N-Mono-, Di- oder Trialkylphenyl mit 1 bis 4 C-Atomen pro Alkylgruppe, einen zweiwertigen Phenylenrest, der gegebenenfalls durch inerte oder nicht störende Gruppen substituiert ist, und/oder eine chemische Bindung, $R^{10}$ bis $R^{15}$ = H, $CH_3$, $C_2H_5$, Phenyl oder Mono-, Di- oder Trialkylphenyl mit 1 bis 4 C-Atomen pro Alkylgruppe, |
| n, m, l = | 0 bis 12, vorzugsweise 0 bis 6, wobei die Summe aus $n+m+l \geqq 2$, vorzugsweise $\geqq 4$ und |
| k = | 1 bis 6, vorzugsweise 1 bis 3, |
| p = | 1 bis 5, |
| A = | verzweigtes oder unverzweigtes $(C_1-C_6)$-Alkyl, |
| x = | 1 bis 5, |
| G = | verzweigtes oder unverzweigtes $(C_1-C_8)$-Alkyl oder $(C_5-C_9)$-Cycloalkyl, gegbenenfalls durch $(C_1-C_3)$-Alkylgruppen substitiuert und gegebenenfalls |

C) einem difunktionellen Amin mit mindestens einer freien primären Aminogruppe und gegebenenfalls mindestens einer sekundären Aminogruppe sowie gegebenenfalls Kettenstoppern D).

**2.** Härtbare Verbindungen nach Anspruch 1, dadurch gekennzeichnet, daß die Verbindung (A) die allgemeine Formel (I) besitzt

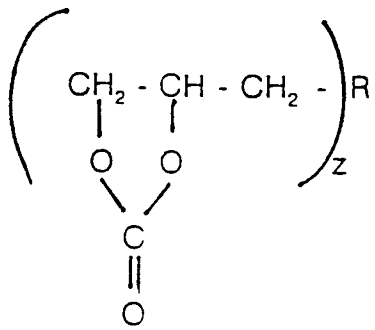

(I)

in der bedeuten

R = z-wertiger Rest eines Polyethers, Polyetherpolyols, Polyesters, Polyesterpolyols, der gegebenenfalls auch ($NR^2$)-Gruppen enthalten kann, wobei $R^2$ für Wasserstoff, Alkyl mit 1 bis 8 C-Atomen oder Hydroxyalkyl mit 1 bis 8 C-Atomen steht, oder einen z-wertigen Kohlenwasserstoffrest, vorzugsweise Alkylenrest mit 2 bis 18 C-Atomen der gegebenenfalls auch inerte oder nichtstörende Gruppen tragen kann, oder
einen z-wertigen Poly(sek.)aminrest oder
den z-wertigen Rest eines Umsetzungsproduktes einer Epoxy-Carbonat-Verbindung mit Polyaminen, Polyolen, Polycaprolactonpolyolen, OH-gruppenhaltigen Polyestern, Polyethern, Polyglykolen, hydroxy-, carboxyl- und aminofunktionellen Polymerölen mit mittleren Molekulargewichten von 800 bis 10 000, Polycarbonsäuren, hxydroxy- oder aminofunktionellen Polytetrahydrofuranen und Reaktionsprodukten von Polyaminen mit Glycidylestern von $\alpha,\alpha$-Dialkylalkanmonocarbonsäuren der Summenformel $C_{12-14}H_{22-26}O_3$ oder mit Versaticsäureglycidylester,

z = 1 bis 5.

**3.** Härtbare Verbindungen nach Anspruch 2, dadurch gekennzeichnet, daß z für 2 steht.

**4.** Härtbare Verbindungen nach mindestens einem der Ansprüche 1 bis 3, dadurch gekennzeichnet, daß die Verbindung (A) aus Epoxid-Carbonaten, der allgemeinen Formel (II)

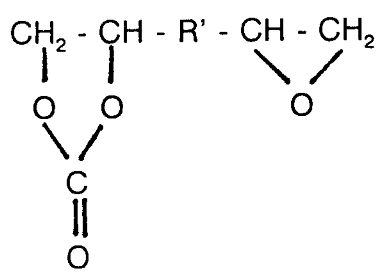

(II)

durch Umsatz von an die Epoxidgruppe addierbaren, multifunktionellen Verbindung hergestellt ist, wobei R' der Bedeutung von R entspricht und die Umsetzungen unter Bedingungen vorgenommen werden, bei denen nur die Epoxydgruppen reagieren und die Carbonatgruppen nicht angegriffen werden.

**5.** Härtbare Verbindungen nach mindestens einem der Ansprüche 1 bis 4, dadurch gekennzeichnet, daß das Polyamin (C) die Formel (VI)

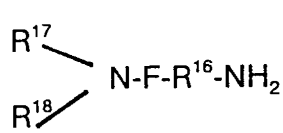

(VI)

besitzt, in der bedeuten:

$R^{16}$ = zweiwertiger Kohlenwasserstoffrest, vorzugsweise ein geradkettiger oder verzweigter Alkylenrest mit 2 bis 18 C-Atomen, der gegebenenfalls inerte oder nicht störende Gruppen tragen kann,

$R^{17}$, $R^{18}$ = gleich oder verschieden, Wasserstoff, Alkyl mit 1 bis 8 C-Atomen oder Hydroxyalkyl mit 1 bis 8 C-Atomen im Alkylrest, wobei $R^{17}$ und $R^{18}$ auch eine cyclische Ringverbindung ergeben können,

F = chemische Bindung oder $-(R^{16}-NH)_r-R^{16}-NH-$, worin r Null oder eine ganze Zahl von 1 bis 6 ist und $R^{16}$ die vorstehende Bedeutung hat.

6. Härtbare Verbindungen nach mindestens einem der Ansprüche 1 bis 5, dadurch gekennzeichnet, daß die Menge an (A) 25 bis 70 Mol-%, die von (B) 8 bis 60 Mol-% und die von (C) 0 bis 60 Mol-% beträgt.

7. Härtbare Verbindungen nach Anspruch 1, dadurch gekennzeichnet, daß es sich bei den Kettenstoppern (D) um Monocarbonate, Monoepoxide oder teilweise blockierte Polyisocyanate handelt.

8. Härtbare Verbindungen nach Anspruch 1, dadurch gekennzeichnet, daß die Kettenstopper (D) die Formel (VII)

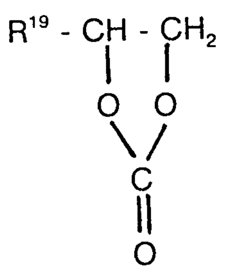

(VII)

besitzen, in der $R^{19}$ Wasserstoff, Alkyl mit 1 bis 18, vorzugsweise 1 bis 10 C-Atomen, oder Reste des Versaticsäurediglycidylesters, Glycidylester oder Glycidyläther darstellt.

9. Härtbare Verbindungen nach Anspruch 1, dadurch gekennzeichnet, daß die Kettenstopper (D) die Formel (VIII)

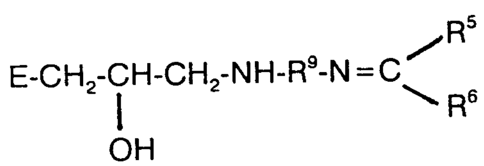

(VIII)

besitzen, worin bedeuten:

$R^5$, $R^6$, $R^9$ = gleiche Bedeutung wie in Formel (III),

E = $(C_2-C_8)$-Alkoxy, linear oder verzweigt, oder $(C_5-C_{15})$-Acryloxy, vorzugsweise verzweigt.

10. Härtbare Verbindungen nach mindestens einem der Ansprüche 1 bis 9, dadurch gekennzeichnet, daß ein Teil der vorhandenen Hydroxyl- und/oder Aminogruppen mit teilverkappten Polyisocyanaten umgesetzt ist.

11. Härtbare Mischungen, gekennzeichnet durch einen Gehalt an härtbaren Verbindungen gemäß mindestens einem der Ansprüche 1 bis 10.

12. Verwendung der härtbaren Verbindungen nach einem oder mehreren der Ansprüche 1 bis 10 als Bindemittel in härtbaren Mischungen, insbesondere Lackzubereitungen.

**13.** Verwendung nach Anspruch 12, dadurch gekennzeichnet, daß es sich um wäßrige Systeme handelt.

**14.** Verwendung nach Anspruch 12 und/oder 13 als Elektrotauchlacke.

**15.** Verwendung nach Anspruch 14, wobei die basischen Aminogruppen teilweise oder vollständig neutralisiert sind.

**Patentansprüche für folgenden Vertragsstaat : ES**

**1.** Verfahren zur Herstellung von härtbaren, stickstoffbasische Gruppen tragenden Verbindungen, dadurch gekennzeichnet, daß man

A) eine Verbindung, die im Mittel mindestens eine endständige 2-Oxo-1,3-dioxolan-Gruppen pro Molekül enthält, mit

B) einem difunktionellen Amin der Formeln III, IV oder V

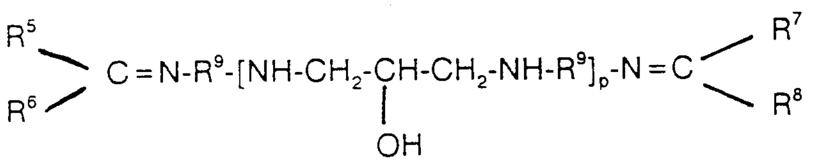

(III)

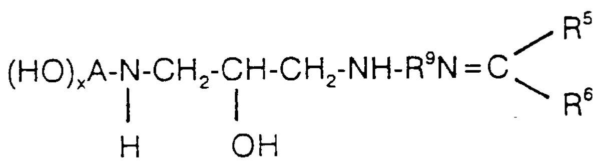

(IV)

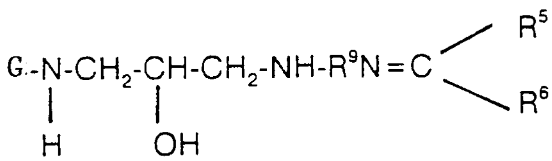

(V)

worin bedeuten:

| | |
|---|---|
| $R^5$, $R^6$, $R^7$, $R^8$ = | gleich oder verschieden $(C_1\text{-}C_6)$Alkyl (verzweigt oder unverzweigt), oder $R^5$ und $R^6$ bzw. $R^7$ und $R^8$ Teil eines cycloaliphatischen Ringes, oder jeweils einer der Reste $R^6$ und/oder $R^8$ gleich Aryl mit 6 bis 12 Atomen; |
| $R^9$ = | $-[-(CR^{10}R^{11}-)_n-Z^1-(-CR^{12}R^{13}-)_m-Z^2-(-CR^{14}R^{15}-)_l-]_k$ mit $Z^1$, $Z^2$ = O, S, N-Alkyl mit bis zu 8 C-Atomen, N-Phenyl, N-Mono-, Di- oder Trialkylphenyl mit 1 bis 4 C-Atomen pro Alkylgruppe, einen zweiwertigen Phenylenrest, der gegebenenfalls durch inerte oder nicht störende Gruppen substituiert ist, und/oder eine chemische Bindung, $R^{10}$ bis $R^{15}$ = H, $CH_3$, $C_2H_5$, Phenyl oder Mono-, Di- oder Trialkylphenyl mit 1 bis 4 C-Atomen pro Alkylgruppe, |
| n, m, l = | 0 bis 12, vorzugsweise 0 bis 6, wobei die Summe aus $n+m+l \geqq 2$, vorzugsweise $\geqq 4$ und |
| k = | 1 bis 6, vorzugsweise 1 bis 3, |
| p = | 1 bis 5, |
| A = | verzweigtes oder unverzweigtes $(C_1\text{-}C_6)$-Alkyl, |
| x = | 1 bis 5, |
| G = | verzweigtes oder unverzweigtes $(C_1\text{-}C_8)$-Alkyl oder $(C_5\text{-}C_9)$-Cycloalkyl, gegbenenfalls durch $(C_1\text{-}C_3)$-Alkylgruppen substituiert und gegebenenfalls |

C) einem difunktionellen Amin mit mindestens einer freien primären Aminogruppe und gegebenenfalls mindestens einer sekundären Aminogruppe sowie gegebenenfalls Kettenstoppern D) umsetzt.

2. Verfahren nach Anspruch 1, dadurch gekennzeichnet, daß die Verbindung (A) die allgemeine Formel (I) besitzt

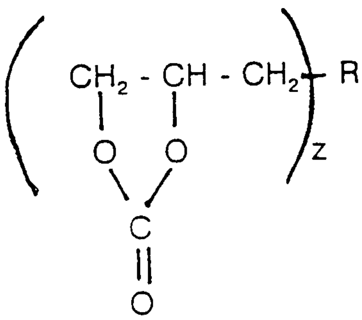

(I)

in der bedeuten

R = z-wertiger Rest eines Polyethers, Polyetherpolyols, Polyesters, Polyesterpolyols, der gegebenenfalls auch ($NR^2$)-Gruppen enthalten kann, wobei $R^2$ für Wasserstoff, Alkyl mit 1 bis 8 C-Atomen oder Hydroxyalkyl mit 1 bis 8 C-Atomen steht, oder einen z-wertigen Kohlenwasserstoffrest, vorzugsweise Alkylenrest mit 2 bis 18 C-Atomen der gegebenenfalls auch inerte oder nichtstörende Gruppen tragen kann, oder einen z-wertigen Poly(sek.)aminrest oder den z-wertigen Rest eines Umsetzungsproduktes einer Epoxy-Carbonat-Verbindung mit Polyaminen, Polyolen, Polycaprolactonpolyolen, OH-gruppenhaltigen Polyestern, Polyethern, Polyglykolen, hydroxy-, carboxyl- und aminofunktionellen Polymerölen mit mittleren Molekulargewichten von 800 bis 10 000, Polycarbonsäuren, hxydroxy- oder aminofunktionellen Polytetrahydrofuranen und Reaktionsprodukten von Polyaminen mit Glycidylestern von $\alpha,\alpha$-Dialkylalkanmonocarbonsäuren der Summenformel $C_{12-14}H_{22-26}O_3$ oder mit Versaticsäureglycidylester,

z = 1 bis 5.

3. Verfahren nach Anspruch 2, dadurch gekennzeichnet, daß z für 2 steht.

4. Verfahren nach mindestens einem der Ansprüche 1 bis 3, dadurch gekennzeichnet, daß die Verbindung (A) aus Epoxid-Carbonaten, der allgemeinen Formel (II)

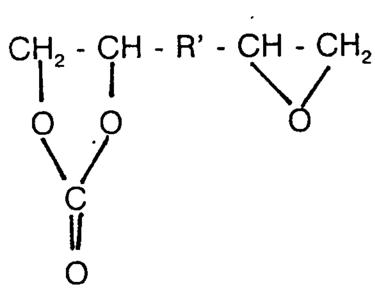

(II)

durch Umsatz von an die Epoxidgruppe addierbaren, multifunktionellen Verbindung hergestellt ist, wobei R' der Bedeutung von R entspricht und die Umsetzungen unter Bedingungen vorgenommen werden, bei denen nur die Epoxydgruppen reagieren und die Carbonatgruppen nicht angegriffen werden.

5. Verfahren nach mindestens einem der Ansprüche 1 bis 4, dadurch gekennzeichnet, daß das Polyamin (C) die Formel (VI)

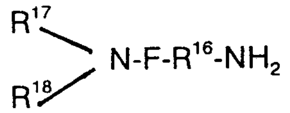

(VI)

besitzt, in der bedeuten:

| | |
|---|---|
| $R^{16}$ = | zweiwertiger Kohlenwasserstoffrest, vorzugsweise ein geradkettiger oder verzweigter Alkylenrest mit 2 bis 18 C-Atomen, der gegebenenfalls inerte oder nicht störende Gruppen tragen kann, |
| $R^{17}$, $R^{18}$ = | gleich oder verschieden, Wasserstoff, Alkyl mit 1 bis 8 C-Atomen oder Hydroxyalkyl mit 1 bis 8 C-Atomen im Alkylrest, wobei $R^{17}$ und $R^{18}$ auch eine cyclische Ringverbindung ergeben können, |
| F = | chemische Bindung oder $-(R^{16}-NH)_r-R^{16}-NH-$, worin r Null oder eine ganze Zahl von 1 bis 6 ist und $R^{16}$ die vorstehende Bedeutung hat. |

**6.** Verfahren nach mindestens einem der Ansprüche 1 bis 5, dadurch gekennzeichnet, daß die Menge an (A) 25 bis 70 Mol-%, die von (B) 8 bis 60 Mol-% und die von (C) 0 bis 60 Mol-% beträgt.

**7.** Verfahren nach mindestens einem der Ansprüche 1 bis 6, dadurch gekennzeichnet, daß es sich bei den Kettenstoppern (D) um Monocarbonate, Monoepoxide oder teilweise blockierte Polyisocyanate handelt.

**8.** Verfahren nach Anspruch 1, dadurch gekennzeichnet, daß die Kettenstopper (D) die Formel (VII)

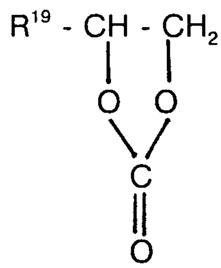

(VII)

besitzen, in der $R^{19}$ Wasserstoff, Alkyl mit 1 bis 18, vorzugsweise 1 bis 10 C-Atomen, oder Reste des Versaticsäurediglycidylesters, Glycidylester oder Glycidyläther darstellt.

**9.** Verfahren nach Anspruch 1, dadurch gekennzeichnet, daß die Kettenstopper (D) die Formel (VIII)

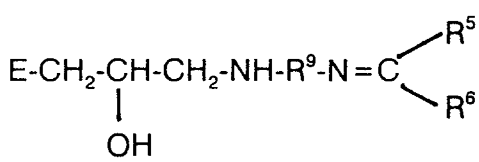

(VIII)

besitzen, worin bedeuten:

| | |
|---|---|
| $R^5$, $R^6$, $R^9$ = | gleiche Bedeutung wie in Formel (III), |
| E = | $(C_2-C_8)$-Alkoxy, linear oder verzweigt, oder $(C_5-C_{15})$-Acryloxy, vorzugsweise verzweigt. |

**10.** Verfahren nach mindestens einem der Ansprüche 1 bis 9, dadurch gekennzeichnet, daß ein Teil der vorhandenen Hydroxyl- und/oder Aminogruppen mit teilverkappten Polyisocyanaten umgesetzt ist.

**11.** Härtbare Mischungen, gekennzeichnet durch einen Gehalt an härtbaren Verbindungen gemäß mindestens einem der Ansprüche 1 bis 10.

**12.** Verwendung der härtbaren Verbindungen nach einem oder mehreren der Ansprüche 1 bis 10 als Bindemittel in härtbaren Mischungen, insbesondere Lackzubereitungen.

**13.** Verwendung nach Anspruch 12, dadurch gekennzeichnet, daß es sich um wäßrige Systeme handelt.

**14.** Verwendung nach Anspruch 12 und/oder 13 als Elektrotauchlacke.

**15.** Verwendung nach Anspruch 14, wobei die basischen Aminogruppen teilweise oder vollständig neutralisiert sind.

**Claims**

**Claims for the following Contracting States : AT, BE, CH, DE, FR, GB, GR, IT, LI, LU, NL, SE**

**1.** Curable compounds carrying groups containing basic nitrogen, obtained by reacting

A) a compound which on average contains at least one terminal 2-oxo-1,3-dioxolane group per molecule, with

B) a difunctional amine according to any of formulae II, IV or V

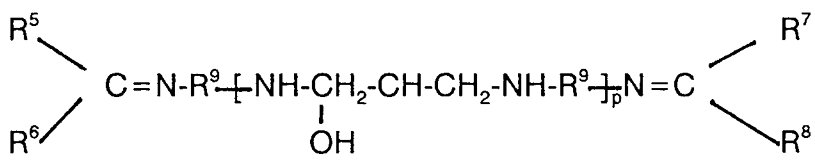

(III)

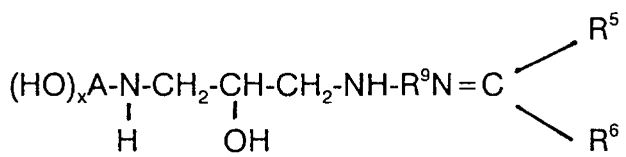

(IV)

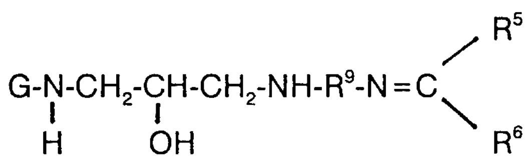

(V)

in which:

| | |
|---|---|
| $R^5$, $R^6$, $R^7$ and $R^8$ | denote identical or different $(C_1\text{-}C_6)$alkyl (branched or unbranched), or $R^5$ and $R^6$ or $R^7$ and $R^8$ denote part of a cycloaliphatic ring, or in each case one of the radicals $R^6$ and/or $R^8$ denotes aryl having 6 to 12 carbon atoms; |
| $R^9$ | denotes $\lfloor (CR^{10}R11)_n Z^1 (CR^{12}R^{13})_m Z^2 (CR^{14}R^{15})_1 \rfloor k$ where $Z^1$ and $Z^2$ denote O, S, N-alkyl having up to 8 carbon atoms, N-phenyl, N-mono-, -di- or trialkylphenyl having 1 to 4 carbon atoms per alkyl group, a divalent phenylene radical which is optionally substituted by inert or non-interfering groups, and/or a chemical bond, |
| $R^{10}$ to $R^{15}$ | denote H, $CH_3$, $C_2H_5$, phenyl or mono-, di- or trialkylphenyl having 1 to 4 carbon atoms per alkyl group, |
| n, m and l | denote 0 to 12, preferably 0 to 6, where the sum of $n+m+l > 2$, preferably $> 4$, |
| k | denotes 1 to 6, preferably 1 to 3, |
| p | denotes 1 to 5, |

| | |
|---|---|
| A | denotes branched or unbranched ($C_1$-$C_6$)alkyl, |
| x | denotes 1 to 5, and |
| G | denotes branched or unbranched ($C_1$-$C_8$)-alkyl or ($C_5$-$C_9$)cycloalkyl, optionally substituted by ($C_1$-$C_3$)alkyl groups, and optionally with |

C) a difunctional amine containing at least one free primary amino group and, if appropriate, at least one secondary amino group, and optionally with chain terminators D).

**2.** Curable compounds as claimed in claim 1, wherein compound (A) has the formula (I)

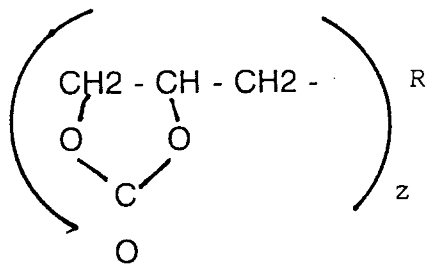
(I)

in which

R denotes a z-valent radical of a polyether, polyether polyol, polyester or polyester polyol, which radical may, if appropriate, also contain ($NR^2$) groups where $R^2$ represents hydrogen, alkyl having 1 to 8 carbon atoms or hydroxyalkyl having 1 to 8 carbon atoms, or
a z-valent hydrocarbon radical, preferably an alkylene radical having 2 to 18 carbon atoms which may optionally carry inert or non-interfering groups, or a z-valent poly(sec.)amine radical or
the z-valent radical of a product of the reaction of an epoxy-carbonate compound with polyamines, polyols, polycaprolactone polyols, OH group-containing polyesters, polyethers, polyglycols, hydroxyl-, carboxyl- and amino-functional polymer oils having mean molecular weight from 800 to 10.000, polycarboxylic acids, hydroxyl- or amino-functional polytetrahydrofurans and products of the reaction of polyamines with glycidyl esters of $\alpha,\alpha$-dialkylalkanemonocarboxylic acids of the empirical formula $C_{12-14}H_{22-26}O_3$ or with the glycidyl ester of versatic acid, and

z denotes 1 to 5.

**3.** Curable compounds as claimed in claim 2, wherein z represents 2.

**4.** Curable compounds as claimed in at least one of claims 1 to 3, wherein compound A) is prepared from epoxide carbonates of the formula (II)

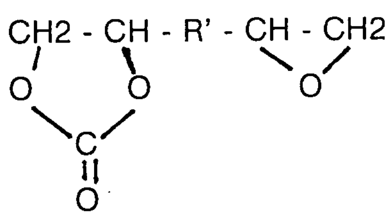
(II)

through reaction with a multifunctional compound which can be adducted with the epoxide group, where R' corresponds to the meaning of R and the reaction is carried out under conditions under which only the epoxide groups react and the carbonate groups are not attacked.

**5.** Curable compounds as claimed in at least one of claims 1 to 4, wherein the polyamine (C) has the formula (VI)

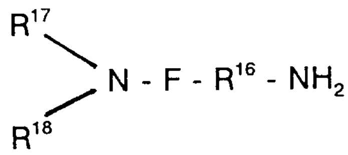

(VI)

in which

$R^{16}$ denotes a divalent hydrocarbon radical, preferably a straight-chain or branched alkylene radical having 2 to 18 carbon atoms which may optionally carry inert or non-interfering groups,

$R^{17}$ and $R^{18}$ are identical or different and denote hydrogen, alkyl having 1 to 8 carbon atoms or hydroxyalkyl having 1 to 8 carbon atoms in the alkyl radical, it being possible for $R^{17}$ and $R^{18}$ to produce a cyclic ring compound, and

F denotes a chemical bond or $-(R^{16}-NH)_r-R^{16}-NH-$ in which r is zero or an integer from 1 to 6 and $R^{16}$ has the above meaning.

**6.** Curable compounds as claimed in at least one of claims 1 to 5, wherein the amount of (A) is 25 to 70 mol-%, that of (B) is 8 to 60 mol-% and that of (C) is 0 to 60 mol-%.

**7.** Curable compounds as claimed in claim 1, wherein the chain terminators (D) are monocarbonates, monoepoxides or partially blocked polyisocyanates.

**8.** Curable compounds as claimed in claim 1, wherein the chain terminators (D) have the formula (VII)

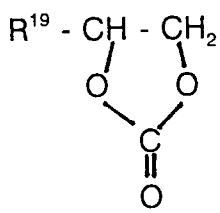

(VII)

in which $R^{19}$ denotes hydrogen, alkyl having 1 to 18, preferably 1 to 10, carbon atoms, or radicals of the glycidyl ester of versatic acid, glycidyl esters or glycidyl ethers.

**9.** Curable compounds as claimed in claim 1, wherein the chain terminators (D) have the formula (VIII)

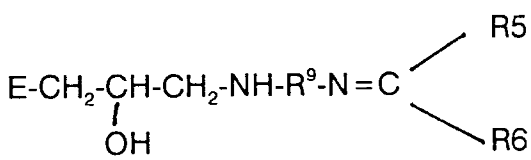

(VIII)

in which

$R_5$, $R_6$ and $R_9$ have the same meaning as in formula II, and

E denotes $(C_2-C_8)$alkoxy, linear or branched, or $(C_5-C_{15})$acryloxy, perferably branched.

**10.** Curable compounds as claimed in at least one of claims 1 to 9, wherein some of the hydroxyl and/or amino groups present have been reacted with partially blocked polyisocyanates.

**11.** Curable mixtures containing curable compounds as claimed in at least one of claims 1 to 10.

**12.** The use of the curable compounds as claimed in one or several of claims 1 to 10, as binders in curable mixtures, in particular surface-coating preparations.

**13.** The use as claimed in claim 12, wherein the mixtures are aqueous systems.

**14.** The use as claimed in claims 12 and/or 13 as electrocoating materials.

**15.** The use as claimed in claim 14, the basic amino gorups being partially or completely neutralized.

**Claims for the following Contracting State : ES**

**1.** Process for curable compounds carrying groups containing basic nitrogen, wherein

A) a compound which on average contains at least one terminal 2-oxo-1,3-dioxolane group per molecule, is reacted with

B) a difunctional amine according to any of formulae II, IV or V

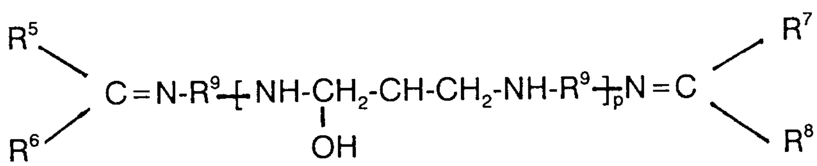

(III)

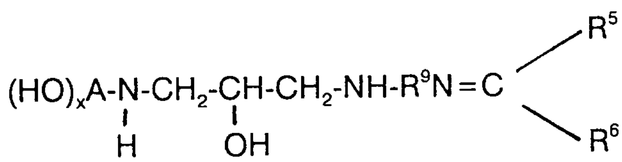

(IV)

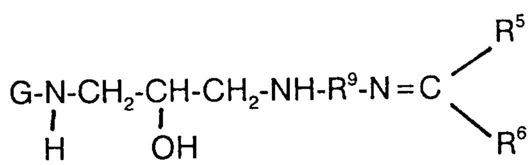

(V)

in which:

$R^5$, $R^6$, $R^7$ and $R^8$ denote identical or different $(C_1\text{-}C_6)$alkyl (branched or unbranched), or $R^5$ and $R^6$ or $R^7$ and $R^8$ denote part of a cycloaliphatic ring, or in each case one of the radicals $R^6$ and/or $R^8$ denotes aryl having 6 to 12 carbon atoms;

$R^9$ denotes $\{(CR^{10}R11)_nZ^1(CR^{12}R^{13})_mZ^2(CR^{14}R^{15})_1\}k$ where $Z^1$ and $Z^2$ denote O, S, N-alkyl having up to 8 carbon atoms, N-phenyl, N-mono-, -di- or trialkylphenyl having 1 to 4 carbon atoms per alkyl group, a divalent phenylene radical which is optionally substituted by inert or non-interfering groups, and/or a chemical bond,

$R^{10}$ to $R^{15}$ denote H, $CH_3$, $C_2H_5$, phenyl or mono-, di- or trialkylphenyl having 1 to 4 carbon atoms per alkyl group,

n, m and l denote 0 to 12, preferably 0 to 6, where the sum of $n + m + l > 2$, preferably $> 4$,

k denotes 1 to 6, preferably 1 to 3,

p denotes 1 to 5,

A denotes branched or unbranched $(C_1\text{-}C_6)$alkyl,

x denotes 1 to 5, and

G denotes branched or unbranched $(C_1\text{-}C_8)$-alkyl or $(C_5\text{-}C_9)$cycloalkyl, optionally substituted by $(C_1\text{-}C_3)$alkyl groups, and optionally with

C) a difunctional amine containing at least one free primary amino group and, if appropriate, at least one secondary amino group, and optionally with chain terminators D).

**2.** The process as claimed in claim 1, wherein compound (A) has the formula (I)

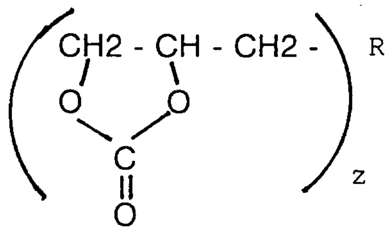

(I)

in which

R denotes a z-valent radical of a polyether, polyether polyol, polyester or polyester polyol, which radical may, if appropriate, also contain ($NR^2$) groups where $R^2$ represents hydrogen, alkyl having 1 to 8 carbon atoms or hydroxyalkyl having 1 to 8 carbon atoms, or
a z-valent hydrocarbon radical, preferably an alkylene radical having 2 to 18 carbon atoms which may optionally carry inert or non-interfering groups, or a z-valent poly(sec.)amine radical or
the z-valent radical of a product of the reaction of an epoxy-carbonate compound with polyamines, polyols, polycaprolactone polyols, OH group-containing polyesters, polyethers, polyglycols, hydroxyl-, carboxyl- and amino-functional polymer oils having mean molecular weight from 800 to 10.000, polycarboxylic acids, hydroxyl- or amino-functional polytetrahydrofurans and products of the reaction of polyamines with glycidyl esters of $\alpha,\alpha$-dialkylalkanemonocarboxylic acids of the empirical formula $C_{12-14}H_{22-26}O_3$ or with the glycidyl ester of versatic acid, and

z denotes 1 to 5.

**3.** The process as claimed in claim 2, wherein z represents 2.

**4.** The process as claimed in at least one of claims 1 to 3, wherein compound A) is prepared from epoxide carbonates of the formula (II)

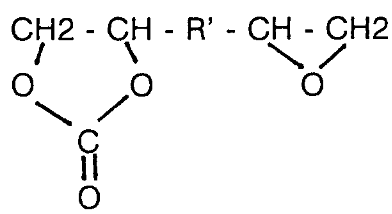

(II)

through reaction with a multifunctional compound which can be adducted with the epoxide group, where R' corresponds to the meaning of R and the reaction is carried out under conditions under which only the epoxide groups react and the carbonate groups are not attacked.

**5.** The process as claimed in at least one of claims 1 to 4, wherein the polyamine (C) has the formula (VI)

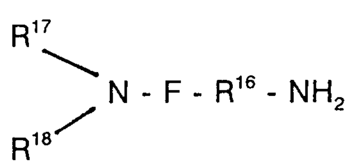

(VI)

in which

$R^{16}$ denotes a divalent hydrocarbon radical, preferably a straight-chain or branched alkylene radical having 2 to 18 carbon atoms which may optionally carry inert or

non-interfering groups,

$R^{17}$ and $R^{18}$ are identical or different and denote hydrogen, alkyl having 1 to 8 carbon atoms or hydroxyalkyl having 1 to 8 carbon atoms in the alkyl radical, it being possible for $R^{17}$ and $R^{18}$ to produce a cyclic ring compound, and

F denotes a chemical bond or $-(R^{16}-NH)_r-R^{16}-NH-$ in which r is zero or an integer from 1 to 6 and $R^{16}$ has the above meaning.

**6.** The process as claimed in at least one of claims 1 to 5, wherein the amount of (A) is 25 to 70 mol-%, that of (B) is 8 to 60 mol-% and that of (C) is 0 to 60 mol-%.

**7.** The process as claimed in at least one of claims 1 to 6, wherein the chain terminators (D) are monocarbonates, monoepoxides or partially blocked polyisocyanates.

**8.** The process as claimed in claim 1, wherein the chain terminators (D) have the formula (VII)

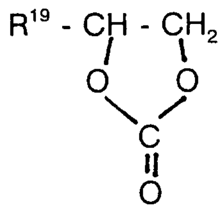

(VII)

in which $R^{19}$ denotes hydrogen, alkyl having 1 to 18, preferably 1 to 10, carbon atoms, or radicals of the glycidyl ester of versatic acid, glycidyl esters or glycidyl ethers.

**9.** The process as claimed in claim 1, wherein the chain terminators (D) have the formula (VIII)

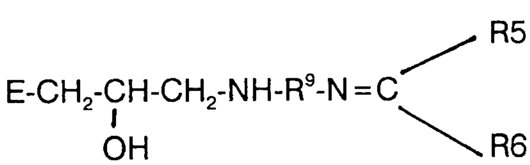

(VIII)

in which

$R_5$, $R_6$ and $R_9$ have the same meaning as in formula II, and

E denotes $(C_2-C_8)$alkoxy, linear or branched, or $(C_5-C_{15})$acryloxy, perferably branched.

**10.** The process as claimed in at least one of claims 1 to 9, wherein some of the hydroxyl and/or amino groups present have been reacted with partially blocked polyisocyanates.

**11.** Curable mixtures containing curable compounds as claimed in at least one of claims 1 to 10.

**12.** The use of the curable compounds as claimed in one or several of claims 1 to 10, as binders in curable mixtures, in particular surface-coating preparations.

**13.** The use as claimed in claim 12, wherein the mixtures are aqueous systems.

**14.** The use as claimed in claims 12 and/or 13 as electrocoating materials.

**15.** The use as claimed in claim 14, the basic amino gorups being partially or completely neutralized.

## Revendications

**Revendications pour les Etats contractants suivants : AT, BE, CH, DE, FR, GB, GR, IT, LI, LU, NL, SE**

**1.** Composés durcissables à groupes azotés basiques qui sont obtenus par réaction

A) d'un composé ayant en moyenne par molécule au moins un groupe 2-oxo-1,3-dioxolane terminal, avec

B) une amine difonctionnelle de formule III, IV ou V

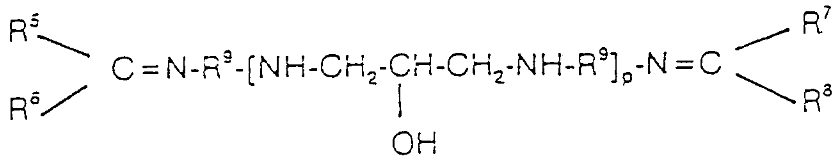

(III)

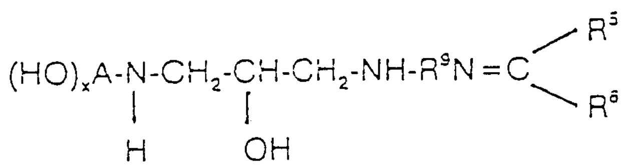

(IV)

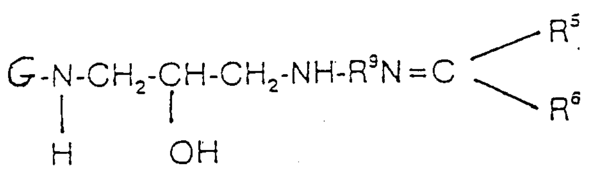

(V)

dans lesquelles :

| | |
|---|---|
| $R^5$, $R^6$, $R^7$ et $R^8$ | représentent des alkyles en $C_1$-$C_6$ identiques ou différents, ramifiés ou non ramifiés, ou bien $R^5$ et $R^6$ et/ou $R^6$ et $R^8$, respectivement, représentent une partie d'un radical cycloaliphatique, ou encore l'un des radicaux $R^6$ et/ou $R^8$ est le même aryle ayant de 6 à 12 atomes ; |
| $R^9$ | est un radical $-[-(CR^{10}R^{11}-)_n-Z^1-(-CR^{12}R^{13}-)_m-Z^2-(CR^{14}R^{15}-)_l-]_k$ $Z^1$ et $Z^2$ désignant chacun un atome d'oxygène ou de soufre, un N-alkyle avec jusqu'à 8 atomes de carbone, un N-phényle, N-mono-, di- ou trialkylphényle avec de 1 à 4 atomes de carbone par alkyle, ou encore un radical phénylène divalent éventuellement substitué par des groupes inertes ou non gênants, et/ou une liaison chimique, $R^{10}$ à $R^{15}$ désignant H, $CH_3$, $C_2H_5$, un phényle ou un mono- di ou trialkylphényle avec de 1 à 4 atomes de carbone par alkyle, |
| n, m et l | chacun un nombre de 0 à 12, de préférence de 0 à 6, la somme n + m + l étant égale ou supérieure à 2 et de préférence égale ou supérieure à 4, et |
| k | un nombre de 1 à 6, de préférence de 1 à 3, |
| p | est un nombre de 1 à 5, |
| A | un alkyle en $C_1$-$C_6$ ramifié ou non, |
| x | un nombre de 1 à 5 et |
| G | un alkyle en $C_1$-$C_8$ ramifié ou non ou un cycloalkyle en $C_5$-$C_9$, éventuellement substitué par des alkyles en $C_1$-$C_3$, et le cas échéant avec |

C) une amine difonctionnelle ayant au moins un groupe amino primaire libre et éventuellement un ou plusieurs groupes amino secondaires, ainsi que le cas échéant avec des agents d'arrêt de chaînes (D).

**2.** Composés durcissables selon la revendication 1, caractérisés en ce que le composé (A) est un composé de formule générale I ci-dessous :

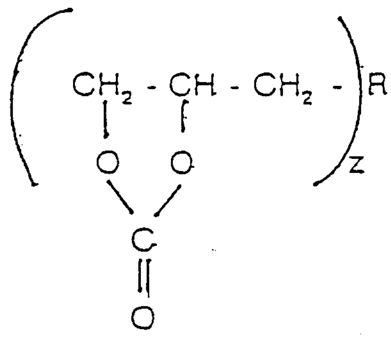 (I)

dans laquelle

R représente le radical de valence z d'un polyéther, d'un polyéther-polyol, d'un polyester ou d'un polyesterpolyol, pouvant éventuellement avoir aussi des groupes ($NR^2$), $R^2$ désignant l'hydrogène ou un alkyle ou un hydroxyalkyle en $C_1$-$C_8$, ou bien un radical hydrocarboné de valence z, de préférence un alkylène en $C_2$ à $C_{18}$ pouvant comporter éventuellement des groupes inertes ou non-préjudiciables, ou un radical de polyamine secondaire de valence z, ou encore
le radical de valence z d'un produit de réaction d'un époxy-carbonate avec des polyamines, des polyols, polycaprolactone-polyols, polyesters à groupes OH, polyéthers, polyglycols, huiles polymères à groupes hydroxyliques, carboxyliques et amino ayant des masses moléculaires moyennes de 800 à 10 000, acides polycarboxyliques, polytétrahydrofurannes à groupes hydroxyliques ou amino, et produits de réaction de polyamines avec des esters glycidyliques d'acides $\alpha,\alpha$-dialkylalcane-mono-carboxyliques $C_{12-14}H_{22-26}O_3$ ou avec un versatate de glycidyle et

z est un nombre de 1 à 5.

**3.** Composés durcissables selon la revendication 2, caractérisiés en ce que z est le nombre 2.

**4.** Composés durcissables selon une ou plusieurs des revendications 1 à 3, caractérisés en ce que le composé (A) est obtenu à partir d'époxy-carbonates de formule II

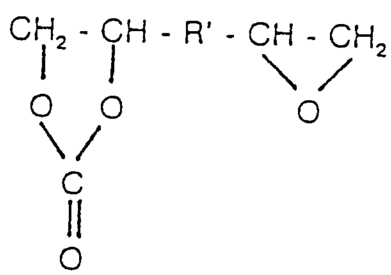 (II)

par réaction d'un composé multifonctionnel additionnable au groupe époxy, R' ayant la signification de R et la réaction étant effectuée dans des conditions dans lesquelles seuls les groupes époxy réagissent et les groupes carbonates ne sont pas attaqués.

**5.** Composés durcissables selon une ou plusieurs des revendications 1 à 4, caractérisés en ce que la polyamine (C) a la formule VI suivante

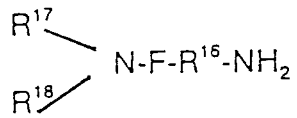

(VI)

dans laquelle

| | |
|---|---|
| $R^{16}$ | représente un radical hydrocarboné divalent, de préférence un alkylène linéaire ou ramifié en $C_2$ à $C_{18}$, avec éventuellement des groupes inertes ou non-préjudiciables, |
| $R^{17}$ et $R^{18}$, | identiques ou différents l'un de l'autre, représentent l'hydrogène ou bien un alkyle ou un hydroxyalkyle en $C_1$-$C_8$ ou encore peuvent former ensemble un composé cyclique, et |
| F | désigne une liaison chimique ou un groupe $-(R^{16}-NH)_r-R^{16}-NH-$, r étant un entier de 0 à 6 et $R^{16}$ ayant la signification précédente. |

**6.** Composés durcissables selon une ou plusieurs des revendications 1 à 5, caractérisés en ce que la proportion du composé (A) est de 25 à 70 mol%, celle du composé (B) de 8 à 60 mol% et celle du composé (C) de 0 à 60 mol%.

**7.** Composés durcissables selon la revendication 1, caractérisés en ce que les agents d'arrêt de chaînes (D) sont des monocarbonates, des monoépoxydes ou des polyisocyanates partiellement bloqués.

**8.** Composés durcissables selon la revendication 1, caractérisés en ce que les agents d'arrêt de chaînes (D) sont des composés de formule VII

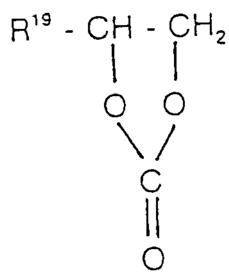

(VII)

$R^{19}$ désignant l'hydrogène, un alkyle en $C_1$ à $C_{18}$, de préférence en $C_1$ à $C_{10}$, ou le radical du versatate de diglycidyle ou d'un autre ester ou éther glycidylique.

**9.** Composés durcissable selon la revendication 1, caractérisés en ce que les agents d'arrêt de chaînes (D) sont des composés de formule VIII

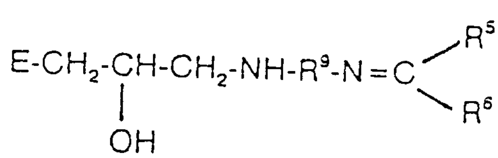

(VIII)

dans laquelle

| | |
|---|---|
| $R^5$, $R^6$ et $R^9$ | ont les mêmes significations que dans la formule III précédente et |
| E | désigne un alcoxy en $C_2$-$C_8$ linéaire ou ramifié ou un acyloxy en $C_5$-$C_{15}$, de |

préférence ramifié.

**10.** Composés durcissables selon une ou plusieurs des revendications 1 à 9, caractérisés en ce qu'une partie des groupes hydroxyliques et/ou amino ont réagi avec des polyisocyanates partiellement masqués.

**11.** Mélanges durcissables caractérisés en ce qu'ils contiennent des composés durcissables selon une ou plusieurs des revendications 1 à 10.

**12.** L'emploi des composés durcissables selon une ou plusieurs des revendications 1 à 10 comme liants dans des mélanges durcissables, en particulier dans des préparations de peintures ou vernis.

**13.** Emploi selon la revendication 12, caractérisé en ce qu'il s'agit de milieux aqueux.

**14.** Emploi selon la revendication 12 et/ou 13 comme peintures pour électrophorèse.

**15.** Emploi selon la revendication 14 pour lequel les groupes amino basiques sont partiellement ou totalement neutralisés.

**Revendications pour l'Etat contractant suivant : ES**

**1.** Procédé de préparation de composés durcissables à groupes azotés basiques, procédé caractérisé en ce que l'on fait réagir

A) un composé ayant en moyenne par molécule au moins un groupe 2-oxo-1,3-dioxolane terminal, avec

B) une amine difonctionnelle de formule III, IV ou V

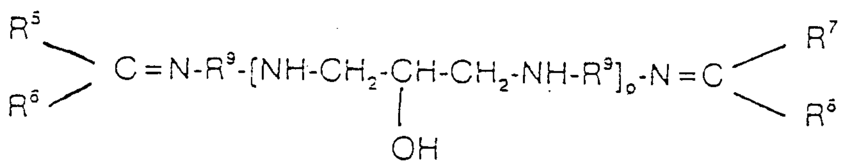

(III)

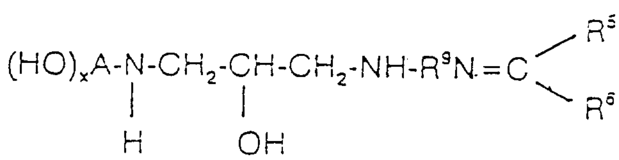

(IV)

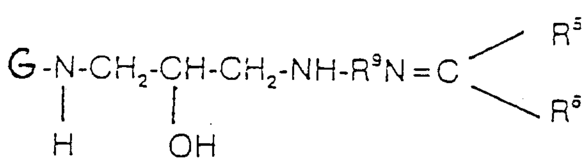

(V)

dans lesquelles :

| | |
|---|---|
| $R^5$, $R^6$, $R^7$ et $R^8$ | représentent des alkyles en $C_1$-$C_6$ identiques ou différents, ramifiés ou non ramifiés, ou bien $R^5$ et $R^6$ et/ou $R^6$ et $R^8$, respectivement, représentent une partie d'un radical cycloaliphatique, ou encore l'un des radicaux $R^6$ et/ou $R^8$ est le même aryle ayant de 6 à 12 atomes ; |
| $R^9$ | est un radical $-[-(CR^{10}R^{11}-)_n-Z^1-(-CR^{12}R^{13}-)_m-Z^2-(CR^{14}R^{15}-)_l-]_k$ $Z^1$ et $Z^2$ désignant chacun un atome d'oxygène ou de soufre, un N-alkyle avec jusqu'à 8 atomes de carbone, un N-phényle, N-mono-, di- ou trialkylphényle avec de 1 à 4 |

atomes de carbone par alkyle, ou encore un radical phénylène divalent éventuellement substitué par des groupes inertes ou non gênants, et/ou une liaison chimique,

$R^{10}$ à $R^{15}$ désignant H, $CH_3$, $C_2H_5$, un phényle ou un mono- di- ou trialkylphényle avec de 1 à 4 atomes de carbone par alkyle,

n, m et l chacun un nombre de 0 à 12, de préférence de 0 à 6, la somme n + m + l étant égale ou supérieure à 2 et de préférence égale ou supérieure à 4, et

k un nombre de 1 à 6, de préférence de 1 à 3,

p est un nombre de 1 à 5,

A un alkyle en $C_1$-$C_6$ ramifié ou non,

x un nombre de 1 à 5 et

G un alkyle en $C_1$-$C_8$ ramifié ou non ou un cycloalkyle en $C_5$-$C_9$, éventuellement substitué par des alkyles en $C_1$-$C_3$, et le cas échéant avec

C) une amine difonctionnelle ayant au moins un groupe amino primaire libre et éventuellement un ou plusieurs groupes amino secondaires, ainsi que le cas échéant avec des agents d'arrêt de chaînes (D).

**2.** Procédé selon la revendication 1, caractérisé en ce que le composé (A) est un composé de formule générale I ci-dessous :

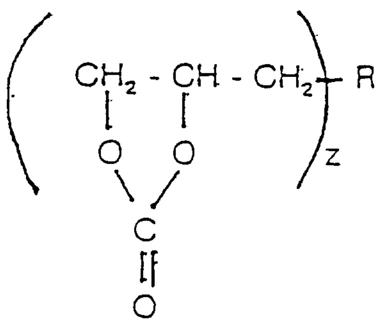

(I)

dans laquelle

R représente le radical de valence z d'un polyéther, d'un polyéther-polyol, d'un polyester ou d'un polyester-polyol, pouvant éventuellement avoir aussi des groupes ($NR^2$), $R^2$ désignant l'hydrogène ou un alkyle ou un hydroxyalkyle en $C_1$-$C_8$, ou bien un radical hydrocarboné de valence z, de préférence un alkylène en $C_2$ à $C_{18}$ pouvant comporter éventuellement des groupes inertes ou non-préjudiciables, ou un radical de polyamine secondaire de valence z, ou encore

le radical de valence z d'un produit de réaction d'un époxy-carbonate avec des polyamines, des polyols, polycaprolactone-polyols, polyesters à groupes OH, polyéthers, polyglycols, huiles polymères à groupes hydroxyliques, carboxyliques et amino ayant des masses moléculaires moyennes de 800 à 10 000, acides polycarboxyliques, polytétrahydrofurannes à groupes hydroxyliques ou amino, et produits de réaction de polyamines avec des esters glycidyliques d'acides $\alpha,\alpha$-dialkylalcane-mono-carboxyliques $C_{12-14}H_{22-26}O_3$ ou avec un versatate de glycidyle et

z est un nombre de 1 à 5.

**3.** Procédé selon la revendication 2, caractérisié en ce que z est le nombre 2.

**4.** Procédé selon une ou plusieurs des revendications 1 à 3, caractérisé en ce que le composé (A) est obtenu à partir d'époxy-carbonates de formule II

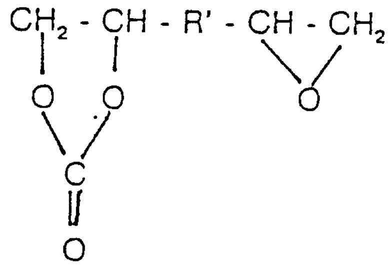

(II)

par réaction d'un composé multifonctionnel additionnable au groupe époxy, R' ayant la signification de R et la réaction étant effectuée dans des conditions dans lesquelles seuls les groupes époxy réagissent et les groupes carbonates ne sont pas attaqués.

**5.** Procédé selon une ou plusieurs des revendications 1 à 4, caractérisé en ce que la polyamine (C) a la formule VI suivante

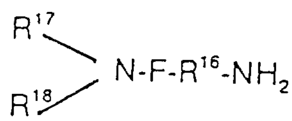

(VI)

dans laquelle

| | |
|---|---|
| $R^{16}$ | représente un radical hydrocarboné divalent, de préférence un alkylène linéaire ou ramifié en $C_2$ à $C_{18}$, avec éventuellement des groupes inertes ou non-préjudiciables, |
| $R^{17}$ et $R^{18}$, | identiques ou différents l'un de l'autre, représentent l'hydrogène ou bien un alkyle ou un hydroxyalkyle en $C_1$-$C_8$ ou encore peuvent former ensemble un composé cyclique, et |
| F | désigne une liaison chimique ou un groupe $-(R^{16}-NH)_r-R^{16}-NH-$, r étant un entier de 0 à 6 et $R^{16}$ ayant la signification précédente. |

**6.** Procédé selon une ou plusieurs des revendications 1 à 5, caractérisé en ce que la proportion du composé (A) est de 25 à 70 mol%, celle du composé (B) de 8 à 60 mol% et celle du composé (C) de 0 à 60 mol%.

**7.** Procédé selon une ou plusieurs des revendications 1 à 6, caractérisé en ce que les agents d'arrêt de chaînes (D) sont des monocarbonates, des monoépoxydes ou des polyiso-cyanates partiellement bloqués.

**8.** Procédé selon la revendication 1, caractérisé en ce que les agents d'arrêt de chaînes (D) sont des composés de formule VII

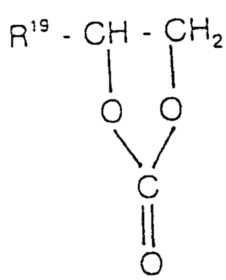

(VII)

$R^{19}$ désignant l'hydrogène, un alkyle en $C_1$ à $C_{18}$, de préférence en $C_1$ à $C_{10}$, ou le radical du versatate de diglycidyle ou d'un autre ester ou éther glycidylique.

**9.** Procédé selon la revendication 1, caractérisé en ce que les agents d'arrêt de chaînes (D) sont des composés de formule VIII

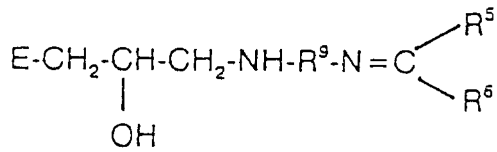

(VIII)

dans laquelle

| | |
|---|---|
| $R^5$, $R^6$ et $R^9$ | ont les mêmes significations que dans la formule III précédente et |
| E | désigne un alcoxy en $C_2$-$C_8$ linéaire ou ramifié ou un acyloxy en $C_5$-$C_{15}$, de préférence ramifié. |

**10.** Procédé selon une ou plusieurs des revendications 1 à 9, caractérisé en ce qu'une partie des groupes hydroxyliques et/ou amino ont réagi avec des polyisocyanates partiellement masqués.

**11.** Mélanges durcissables caractérisés en ce qu'ils contiennent des composés durcissables selon une ou plusieurs des revendications 1 à 10.

**12.** L'emploi des composés durcissables selon une ou plusieurs des revendications 1 à 10 comme liants dans des mélanges durcissables, en particulier dans des préparations de peintures ou vernis.

**13.** Emploi selon la revendication 12, caractérisé en ce qu'il s'agit de milieux aqueux.

**14.** Emploi selon la revendication 12 et/ou 13 comme peintures pour électrophorèse.

**15.** Emploi selon la revendication 14 pour lequel les groupes amino basiques sont partiellement ou totalement neutralisés.